## Europäisches Patentamt

## European Patent Office

## Office européen des brevets

(19)

(11) Veröffentlichungsnummer: **0 036 167**
**B1**

(12) **EUROPÄISCHE PATENTSCHRIFT**

(45) Veröffentlichungstag der Patentschrift:
14.03.84

(51) Int. Cl.³: **G 03 B 17/44**

(21) Anmeldenummer: 81101728.4

(22) Anmeldetag: 09.03.81

(54) Fotographische Kamera, insbesondere für architektonische und technische Aufnahmen.

(30) Priorität: 10.03.80 DE 3009157

(43) Veröffentlichungstag der Anmeldung:
23.09.81 Patentblatt 81/38

(45) Bekanntmachung des Hinweises auf die Patenterteilung:
14.03.84 Patentblatt 84/11

(84) Benannte Vertragsstaaten:
AT BE CH DE FR GB IT LI LU NL SE

(56) Entgegenhaltungen:
AT - B - 51 884
DE - B - 1 276 995
DE - C - 513 560
DE - C - 1 116 052
US - A - 1 379 189
US - A - 1 421 092
US - A - 4 149 791

(73) Patentinhaber: Lutze, Stephan, Neubergstrasse 10a,
D-8700 Würzburg (DE)

(72) Erfinder: Lutze, Stephan, Neubergstrasse 10a,
D-8700 Würzburg (DE)

(74) Vertreter: Kraus, Walter, Dr. et al, Patentanwälte Dres.
Kraus & Weisert Irmgardstrasse 15,
D-8000 München 71 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Fotographische Kamera, insbesondere für architektonische und technische Aufnahmen

Die Erfindung betrifft eine fotographische Kamera, insbesondere für architektonische und technische Aufnahmen, bei der die Objektivstandarte und der Kamerarückteil des Kameragehäuses verschwenkbar ausgebildet sind und das Objektiv parallel zur Bildebene verschiebbar ist, in die wahlweise eine Mattscheibe oder ein in der Filmhalterung gehaltener und von einer Filmvorratsspule zugeführter sowie von einer Filmaufwickelspule aufnehmbarer Filmabschnitt von bandförmigem Filmmaterial bewegbar ist, umfassend

(a) eine Mattscheibenbetätigungseinrichtung zum Bewegen der Mattscheibe zwischen einer operativen Stellung, in der sie sich in der Bildebene befindet, und einer inoperativen Stellung, in der sie sich außerhalb der Bildebene befindet;

(b) eine Filmhalterungsbetätigungseinrichtung zum Bewegen der Filmhalterung zwischen einer inoperativen Stellung, in welcher sich der darin gehaltene Filmabschnitt außerhalb der Bildebene befindet, und einer operativen Stellung, in welcher sich der darin gehaltene Filmabschnitt in der Bildebene befindet;

(c) eine Kopplungseinrichtung zum Koppeln der Bewegung der Filmhalterung derart, daß die Bewegung der Mattscheibe in ihre inoperative Stellung zeitlich vor oder gleichzeitig mit der Bewegung der Filmhalterung in deren operative Stellung erfolgt und daß die Bewegung der Filmhalterung in ihre inoperative Stellung zeitlich vor oder gleichzeitig mit der Bewegung der Mattscheibe in deren operative Stellung erfolgt.

Die erfindungsgemäße fotographische Kamera ist ganz allgemein auf Kleinbildformat, wie beispielsweise das Format von 24 × 36 mm, und auf Mittelformat, wie beispielsweise auf das Format von 6 × 7 cm, anwendbar. Die Formatgrößen der fotographischen Aufnahmen, die mit der erfindungsgemäßen Kamera erfaßt werden können, sind im übrigen nicht beschränkt, sondern nur durch die Dimensionen und das Gewicht der Kamera insoweit begrenzt, als diese gewisse praktikable Grenzen nicht überschreiten sollten. Die Kamera nach der Erfindung soll speziell für die Architekturfotographie und die Fotographie von Objekten technischen Charakters anwendbar sein, und vor allem auf diesen Gebieten ist zur Vermeidung von stürzenden Linien auf Architekturaufnahmen ist die Möglichkeit zur weitgehenden Parallelverschiebung des Objektivs mit erweitertem Bildkreis zur Filmebene notwendig. Die Verschwenkung von Objektivstandarte und Kamerarückteil dient in erster Linie zur Schärfedehnung nach dem Scheimpflug'schen Prinzip.

Zur Vermeidung stürzender Linien bei Architekturaufnahmen hat die Kamera- bzw. Objektivindustrie für Kleinbild- und Mittelformatkameras sogenannte »Shiftobjektive« entwickelt, mit denen auch bei Spiegelreflexkameras eine Parallelverschiebung des Objektivs zur Filmebene, zum Teil sogar leichte Verschwenkung, in gewissen Grenzen ermöglicht wird (Color Foto Spezial 2/79, Seite 11; 28: Stichwort »Shiftobjektiv«; 41; 42;). Die Grenzen der Verstellbarkeit ergeben sich natürlicherweise aus dem Durchmesser des Objektivbajonetts bzw. den Dimensionen des Schwingspiegelgehäuses. Wenn das Objektiv durch Parallelverschiebung seitlich hinter den Rändern der Bajonettöffnung verschwindet bzw. von einer Kante des Spiegelgehäuses gegenüber der Filmbühne teilweise oder ganz abgedeckt wird, ist keine technisch einwandfreie Fotographie mehr möglich. Einen Ausweg aus diesem Dilemma gäbe es nur, wenn man die Spiegelreflexkamera durch eine entsprechend verstellbare Kamera ersetzte, die aber in der gegenwärtig üblichen Form erstens für Kleinbild- und Mittelformat bis 6 × 6 cm nicht existiert, und die andererseits in ihrer gegenwärtig gebräuchlichen Form der Anwendung derart umständlich ist, daß sie für die den Bedienungskomfort der Kleinbildkamera gewohnten Käuferschichten unzumutbar erscheint. Zunächst steht das Mattscheibenbild auf dem Kopf und sollte möglichst unter einem schwarzen Tuch, vor Seiten- und Rücklicht geschützt, betrachtet werden. Ein im Prinzip anwendbarer Umkehrsucher, der das Bild aufstellt, erscheint beim Großformat einfach aus Gründen des Gewichts und der Größe nicht sehr praktisch. Nach Festlegung des Bildausschnitts muß der Verschluß geschlossen werden, die Mattscheibe wird gegen die Filmkassette bzw. die fotographische Platte ausgetauscht. Die Lichtabdeckung von Film bzw. Platte wird entfernt, erst jetzt kann die Belichtung erfolgen. Danach ergibt sich die gleiche Tätigkeit in umgekehrter Reihenfolge: Lichtabdeckung vor Film bzw. Platte anbringen, Filmkassette oder Platte entfernen und durch Mattscheibe ersetzen, Verschluß öffnen, Mattscheibe durch schwarzes Tuch vor Seiten- und Rücklicht schützen, dann mit Festlegung eines neuen Bildausschnitts beginnen.

Theoretisch ist eine technisch einwandfreie Architekturaufnahme auch bei einer Kamera mit starrer Optik (nicht verschieb- und verschwenkbar) und einem Weitwinkelobjektiv mit sehr großem Bildwinkel möglich, wenn bei der Aufnahme eine Verkantung vermieden wird und beim Vergrößern die bildunwichtigen Teile, wie etwa der überflüssige Boden im Vordergrund, weggeschnitten werden. Diese Möglichkeit bietet allerdings durch das entsprechend stark vergrößerte Filmkorn gerade bei der Kleinbildfotographie nur zweitrangige Bildqualität. Es ergibt sich also das groteske Mißverhältnis, daß man in der Großbildfotographie, wo die Ausschnittvergrößerung durchaus hervorragende Bildqualität ermöglicht, durch die Verstellbarkeit der Kameras darauf verzichten kann, während in der Kleinbildfotographie, wo der Ausschnittvergrößerung enge Grenzen gesetzt sind, darauf angewiesen ist.

Aus der DE-C-1 116 052 ist eine fotographische Kamera der eingangs genannten Art bekannt. Diese fotographische Kamera ist im einzelnen so aufgebaut, daß sie eine vordere Standarte, eine hintere Standarte, einen Verbindungsstift für die beiden Standarten und einen zwischen den Standarten vorhandenen Balg aufweist, wobei die vordere Standarte mit einem Objektiv versehen ist und einen Verschluß enthält. In die hintere Standarte ist ein Ansatzstück einer Führung lösbar eingeschoben. Diese Führung besteht aus einer Platte und einem die Platte umgebenden Rahmen. In der Führung ist ein Schlitten verschiebbar gelagert, auf dem nebeneinander eine Mattscheibe und ein Negativträger in Form einer Rollfilmkassette angeordnet sind. Die Platte besitzt eine rechteckige Durchbrechung, welche die Bildebene definiert. Durch Verschiebung des Schlittens ist es möglich, die Mattscheibe oder die Rollfilmkassette wahlweise vor die Durchbrechung zu bringen. Die Mattscheibe und die Rollfilmkassette sind unmittelbar nebeneinander auf dem Schlitten angeordnet, wobei letztere lösbar und auswechselbar am Schlitten befestigt ist. Zum Verschieben des Schlittens ist an demselben ein Handgriff befestigt.

Nachteilig an dieser bekannten fotographischen Kamera ist es insbesondere, daß die Rollfilmkassette zusammen mit dem zu belichtenden Filmabschnitt jeweils in die operative Stellung verschoben werden muß. Dadurch ergibt sich eine ziemlich große Trägheit der gesamten Anordnung, die es entweder, wie im Falle der DE-C-1 116 052, erforderlich macht, die Mattscheibe und die Filmhalterung jeweils von Hand aus der inoperativen Stellung in die operative Stellung, und umgekehrt, zu verschieben, oder die eine verhältnismäßig große und relativ viel Leistung verbrauchende mechanische Bewegungsvorrichtung zum Bewegen der Mattscheibe und der Filmhalterung in ihre jeweiligen Stellungen erfordern würde.

Selbst wenn für das Bewegen der Filmhalterung und der Mattscheibe eine durch Spannen einer Feder oder Ingangsetzen eines batteriegetriebenen Motors betätigbare mechanische Vorrichtung verwendet wird, ergeben sich insbesondere noch folgende Nachteile:

Eine durch Spannen einer Feder betätigbare mechanische Vorrichtung ist verhältnismäßig raumaufwendig und erfordert eine entsprechend starke Feder zum Bewegen der relativ großen Masse, was wiederum entweder eine große Kraft für das Spannen der Feder erforderlich macht oder, wenn man die notwendige Kraft durch eine Hebelübersetzung herabsetzt, eine langhubige Spannbewegung zum Spannen dieser Feder zur Folge hat. Im Falle eines Bewegens der die Filmvorratsspule und die Filmaufwickelspule aufweisenden Filmhalterung mittels eines batteriegetriebenen Elektromotors sind verhältnismäßig große und damit raumaufwendige und das Gewicht der fotographischen Kamera nicht unbeträchtlich vergrößernde Batterien notwendig, und zudem erschöpfen sich diese Batterien relativ bald.

Durch die große Masse einer Rollfilmkassette, die nicht nur durch die Filmvorratsspule, die Filmaufwickelspule und den vollständigen Film bedingt ist, sondern auch durch die für die Filmvorratsspule und die Filmaufwickelspule erforderliche stabile Halterung, ist die Geschwindigkeit, mit der die Mattscheibe durch die mit den Filmspulen versehene Filmhalterung ersetzt werden kann, begrenzt, so daß schnelle Reihenaufnahmen praktisch nicht möglich sind.

Schließlich ist es zum jeweiligen Abbremsen der relativ großen Masse aus Filmhalterung und daran angebrachten Filmspulen etc. unbedingt notwendig, entsprechende Dämpfungsvorrichtungen zum Anhalten der Filmhalterung zumindest in der operativen Stellung vorzusehen. Trotzdem ist die Schnelligkeit, mit der die Filmhalterung in ihrer operativen Stellung zur Ruhe kommt, so daß ein scharfes Bild erhalten wird, begrenzt, so daß von daher die Fotographiergeschwindigkeit eingeschränkt wird. Abgesehen hiervon verursachen die verhältnismäßig starken Erschütterungen beim Anhalten der die Filmspulen etc. aufweisenden Filmhalterung, z. B. einer Rollfilmkassette, Erschütterungen der gesamten fotographischen Kamera, die zu Verwacklungsunschärfen der Fotografien führen müssen.

Ein Beispiel einer solchen unbefriedigenden fotographischen Kamera ist aus der US-A-1 379 189 bekannt, wonach innerhalb der fotographischen Kamera eine mit Verschluß versehene »Rollfilmkassette« um die Achse der einen Filmspule verschwenkbar angeordnet ist.

Aus der AT-A-51 884 ist eine fotographische Kamera bekannt, die ebenfalls eine Mattscheibenbetätigungseinrichtung zum Bewegen der Mattscheibe zwischen einer operativen Stellung, in der sie sich in der Bildebene befindet, und einer inoperativen Stellung, in der sie sich außerhalb der Bildebene befindet, besitzt, wobei diese Kamera außerdem eine Filmhalterungsbetätigungseinrichtung zum Bewegen der Filmhalterung zwischen einer inoperativen Stellung, in welcher sich der darin gehaltene Filmabschnitt, der die Form einer Platte hat, außerhalb der Bildebene befindet, und einer operativen Stellung, in welcher sich der darin gehaltene Filmabschnitt in der Bildebene befindet, aufweist. Schließlich ist eine Kopplungseinrichtung zum Koppeln der Bewegung der Mattscheibe und der Bewegung der Filmhalterung derart, daß die Bewegung der Mattscheibe in ihre inoperative Stellung gleichzeitig mit der Bewegung der Filmhalterung in deren operative Stellung erfolgt und daß die Bewegung der Filmhalterung in ihre operative Stellung gleichzeitig mit der Bewegung der Mattscheibe in deren operative Stellung erfolgt, vorgesehen. Bei dieser fotographischen Kamera wird zwar die Verwendung von Filmspulen vermieden, indem jeweils eine einzelne fotographische Platte verwendet wird, jedoch sind dadurch die bequemen Aufnahmen auf Rollfilm ausgeschlossen.

Aufgabe der Erfindung ist es, ausgehend von einer fotographischen Kamera der Art, wie sie in der DE-C-1 116 052 beschrieben ist, diese so auszubilden, daß sie es ermöglicht, bei Verwendung von Rollfilm die Mattscheibe und die Filmhalterung schnell gegeneinander auszutauschen, ohne daß nachteilige Vorgänge und Veränderungen an der Kamera, wie beispielsweise das Auftreten starker Erschütterungen und ein erheblicher zusätzlicher Raumaufwand in Kauf genommen werden müssen, wobei bei dieser fotographischen Kamera, damit sie insbesondere für architektonische und technische Aufnahmen geeignet ist, die Objektivstandarte und der Kamerarückteil des Kameragehäuses verschwenkbar ausgebildet sein sollen und das Objektiv parallel zur Bildebene verschiebbar sein soll.

Letzteres, d. h. eine verschwenkbare Ausbildung der Objektivstandarte und des Kamerarückteils des Kameragehäuses, sowie eine Verschiebbarkeit des Objektivs parallel zur Bildebene ist an sich, wie die DE-B-1 276 995 beispielsweise zeigt, bei fotographischen Kameras, die insbesondere für architektonische und technische Aufnahmen verwendet werden sollen, bekannt.

Diese Aufgabe wird erfindungsgemäß dadurch gelöst, daß eine Schlaufenbildungseinrichtung zum Ausbilden einer Schlaufe des bandförmigen Filmmaterials zwischen einer ortsfesten Filmvorratsspule und der Filmhalterung und/oder zwischen der Filmhalterung und einer ortsfesten Filmaufwickelspule zum Ermöglichen der Bewegung der Filmhalterung relativ zur Filmzuführungs- und -abführungseinrichtung in die operative Stellung und/oder in die inoperative Stellung vorgesehen ist.

Diese fotographische Kamera nach der Erfindung gestattet einen schnellstmöglichen Austausch der Mattscheibe durch die Filmhalterung, ohne daß dabei wesentliche Erschütterungen auftreten, sowie bei geringstmöglichen Leistungsbedarf einer die Bewegung der Mattscheibe und der Filmhalterung bewirkenden Vorrichtung und ohne daß sich ein wesentlich vergrößerter Raumbedarf für die Kamera ergibt.

Außerdem läßt diese erfindungsgemäße Lösung der obigen Aufgabe praktisch alle grundsätzlichen Möglichkeiten der Bewegung des fotographischen Films in die Aufnahmestellung und damit der Relativbewegung der Filmhalterung bezüglich der Filmvorratsspule und der Filmaufwickelspule offen.

Mit der vorliegenden Erfindung wird daher eine Lösung der obigen Aufgabe erzielt, die praktisch alle baulichen Freiheiten für die Bewegung der Filmhalterung und die Anordnung der Filmspulen bzw. Kassetten gewährt, was nicht nur allgemein außerordentlich vorteilhaft ist, sondern auch eine Anpassung an die verschiedensten Kamerabauweisen ermöglicht.

Die Bewegung der Filmhalterung, beispielsweise einer Filmbühneneinheit mit dem von ihr eingefaßten Filmabschnitt, wird dabei ermöglicht durch die dem Filmmaterial eigene Flexibilität. Der Funktionsablauf bei der Aufnahme erfolgt unter entsprechenden Schutzvorkehrungen gegen Licht von der Sucher- und Objektivseite.

Damit die zur Ausnutzung der dem Filmmaterial eigenen Flexibilität erforderlichen Schlaufen in zuverlässiger und möglichst einfacher Weise ausgebildet und für die Bewegung der Filmhalterung bzw. -bühneneinheit freigegeben werden, kann die Kamera so aufgebaut sein, daß die Schlaufenbildungseinrichtung zur Ausbildung der jeweiligen Schlaufe eine zwischen der Filmvorratsspule und der Filmhalterung und/oder zwischen der Filmhalterung und der Filmaufwickelspule angeordnete Filmumlenkspule aufweist, die aus der durch die Umlenkung des Films gebildeten Schlaufe herausbewegbar ist, während oder bevor die Bewegung der Filmhalterung aus deren inoperativen in deren operative Stellung erfolgt; oder daß die Schlaufenbildungseinrichtung mehrere synchron drehbare Zahnkränze aufweist, die in Perforationen des Films eingreifen, und zwar vorzugsweise einen ersten zwischen der Filmvorratsspule und der Filmhalterung, bevorzugt in der Nähe der Filmvorratsspule angeordneten Zahnkranz zur Ausbildung einer Filmschlaufe zwischen diesem Zahnkranz und der Filmhalterung, sowie einen zweiten und dritten Zahnkranz zwischen der Filmhalterung und der Filmaufwickelspule zur Ausbildung einer Filmschlaufe zwischen diesen beiden Zahnkränzen, von denen der eine bevorzugt in der Nähe der Filmaustrittsstelle der Filmhalterung und der andere bevorzugt in der Nähe der Filmaufwickelspule angeordnet ist.

Für die Art der Bewegbarkeit der Filmhalterung bzw. -bühneneinheit einerseits und der Mattscheibe andererseits sowie für die Anordnung und Bewegung der Filmhalterung bzw. -bühneneinheit relativ zur Mattscheibe ergeben sich gemäß der Erfindung verschiedenste Möglichkeiten:

Eine besonders bevorzugte Ausführungsform der Kamera nach der Erfindung zeichnet sich diesbezüglich dadurch aus, daß die Filmhalterung um eine zur Längsrichtung des Films senkrechte Schwenkachse, die an oder in der Nähe der Eintrittsstelle des Films in die Filmhalterung angeordnet ist, von der inoperativen in die operative Stellung, und umgekehrt, verschwenkbar ist; wobei vorzugsweise die Filmzuführungs- und -abführungseinrichtung, insbesondere die Filmvorratsspule und die Filmaufwickelspule, relativ zu der in der operativen Stellung befindlichen Mattscheibe hinter der Filmhalterung angeordnet sind; und wobei außerdem bevorzugt eine erste Filmumlenkspule zwischen der Filmvorratsspule und der Filmhalterung ortsfest in der Nähe der Eintrittsstelle des Films in die Filmhalterung vorgesehen und eine zweite Filmumlenkspule an der Austrittsstelle des Films aus der Filmhalterung an letzterer befestigt ist, wobei ferner gegebenenfalls eine dritte Filmumlenkspule zwischen der zweiten Filmumlenkspule und einer zur Schlaufenbildung vorgesehenen, beweglichen Filmumlenkspule an der Rückseite der Filmhalterung angebracht ist.

Aufgrund einer solchen Ausbildung ergibt sich ein besonders einfacher und für den Filmverlauf sowie die Beanspruchung des Films auf dessen Flexibilität besonders vorteilhafter Aufbau, der im übrigen eine besonders kompakte Ausbildung der erfindungsgemäßen Kamera ermöglicht.

Eine weitere Ausführungsform der erfindungsgemäßen Kamera zeichnet sich dadurch aus, daß die Filmhalterung um eine zur Längsrichtung des Films parallele Schwenkachse, die an oder in der Nähe eines ihrer in dieser Längsrichtung verlaufenden Ränder angeordnet ist, von der inoperativen in die operative Stellung, und umgekehrt, verschwenkbar ist; wobei vorzugsweise die Filmzuführungseinrichtung auf der einen Seite und die Filmabführungseinrichtung auf der anderen Seite der senkrecht zur Filmlängsrichtung verlaufenden Ränder der Filmhalterung vorgesehen und bevorzugt die Achsen der Filmvorratsspule und der Filmaufwickelspule senkrecht zur Ebene des in der Filmhalterung befindlichen Filmabschnitts ausgerichtet sind, wenn sich die Filmhalterung in der inoperativen Stellung befindet.

Auch diese Ausbildungsform ermöglicht einen ziemlich kompakten Aufbau, wobei jedoch die Flexibilität des Films stärker als in der vorgenannten Ausbildungsform beansprucht wird.

Schließlich zeichnet sich eine noch andere Ausführungsform der erfindungsgemäßen Kamera dadurch aus, daß die Filmhalterung und die Mattscheibe neben- oder übereinander angeordnet sind, und daß vorzugsweise

(a) die Filmhalterung und die Mattscheibe starr miteinander verbunden und unverwinkelt zueinander vorgesehen sind, so daß der in der Filmhalterung befindliche Film und die Mattscheibe in der gleichen Ebene liegen und aus der inoperativen in die operative Stellung, und umgekehrt, in dieser Ebene verschiebbar sind, und vorzugsweise die Achsen der Filmvorratsspule und der Filmaufwickelspule parallel zur Ebene der Mattscheibe angeordnet sind; wobei bei einer Übereinanderanordnung, bei der die Filmhalterung und die Mattscheibe senkrecht zur Längsrichtung des Films bewegbar sind, bevorzugt die Filmzuführungseinrichtung auf der einen Seite und die Filmabführungseinrichtung auf der anderen Seite der senkrecht zur Filmlängsrichtung verlaufenden Ränder der Filmhalterung und der Mattscheibe vorgesehen sind, während bei einer Nebeneinanderanordnung, bei der die Filmhalterung und die Mattscheibe in der Längsrichtung des Films bewegbar sind, bevorzugt die Filmzuführungs- und -abführungseinrichtung gemeinsam auf der Seite des senkrecht zur Filmlängsrichtung verlaufenden und der Mattscheibe abgewandten Randes der Filmhalterung angeordnet sind; oder

(b) die Filmhalterung und die Mattscheibe gelenkig miteinander verbunden sind sowie in der operativen Stellung der Mattscheibe und der inoperativen Stellung der Filmhalterung einen stumpen bis spitzen Winkel miteinander einschließen und die Filmhalterung bevorzugt derart geführt ist, daß sich der Winkel, den sie mit der Mattscheibe einschließt, entweder kontinuierlich auf Null Grad verkleinert, sofern die Mattscheibe und die Filmhalterung übereinander angeordnet und an ihren einander abgewandten Rändern miteinander gelenkig verbunden sind, oder kontinuierlich auf 180 Grad vergrößert, wenn die Mattscheibe und die Filmhalterung nebeneinander angeordnet und an ihren einander zugewandten Rändern gelenkig miteinander verbunden sind; wobei vorzugsweise die Filmzuführungseinrichtung auf der einen Seite und die Filmabführungseinrichtung auf der anderen Seite der senkrecht zur Filmlängsrichtung verlaufenden Ränder der Filmhalterung und der Mattscheibe vorgesehen sind.

Auch diese Ausführungsform ermöglicht einen ziemlich kompakten Aufbau der erfindungsgemäßen Kamera in ihren verschiedenen Varianten, die ihrerseits unterschiedliche Aufwendungen zum Schützen des Films gegen unerwünschte Belichtung erfordern.

Insgesamt sind jedoch, verglichen mit den erheblichen Vorteilen, welche die erfindungsgemäße fotographische Kamera bietet, die Aufwendungen zum Schützen des Films gegen unerwünschte Belichtung relativ gering, jedoch für die verschiedenen Ausführungsformen im allgemeinen unterschiedlich. Generell kann die erfindungsgemäße Kamera zum Schutz gegen unerwünschte Belichtung des Films so ausgebildet sein, daß eine Abdunklungseinrichtung zum Abdunkeln des in der Filmhalterung befindlichen Filmabschnitts vor und nach dessen Belichtung sowie zum Abdunkeln des in der Filmzuführungs- und -abführungseinrichtung befindlichen Films vor, während und nach der Belichtung vorgesehen ist, und zwar vorzugsweise:

(a) ein synchron mit dem Belichtungsverschluß schließbarer Sucherokularverschluß, welcher an die Mattscheiben- und/oder Filmhalterungsbetätigungseinrichtung derart angekoppelt ist, daß eine Abdunklung des Suchergehäuses während der Bewegung der Filmhalterung in die operative und in die inoperative Stellung erfolgt und

(b) eine ortsfeste oder synchrone zur Bewegung der Filmhalterung betätigbare Abdunklungseinrichtung für die Filmzuführungs- und -abführungseinrichtung; sowie eine ebenfalls synchron zur Bewegung der Filmhalterung betätigbare Abdunklungseinrichtung für den in der Filmhalterung befindlichen Filmabschnitt, sofern sich die Filmhalterung in ihrer inoperativen Stellung im Streulichtbereich des Suchergehäuses befindet.

Die vorstehenden sowie weitere Vorteile und Merkmale der Erfindung seien nachfolgend anhand einiger in den Fig. 1 bis 31 im Prinzip dargestellter, besonders bevorzugter Ausführungsformen näher erläutert; es zeigt

Fig. 1 einen Querschnitt durch eine Filmbühneneinheit gemäß der Erfindung, wie sie vorzugsweise als Filmhalterung in verschiedenen Ausführungsformen der Kamera nach der Erfindung verwendet wird;

Fig. 2 eine Aufsicht auf die Filmbühneneinheit der Fig. 1 von vorn;

Fig. 3 eine schematische Darstellung einer ersten Ausführungsform der erfindungsgemäßen Kamera, in welcher die Mattscheibe und die Filmbühneneinheit übereinander angeordnet und an ihren einander zugewandten und aneinander anstoßenden Rändern gelenkig miteinander verbunden sind, wobei sie in der operativen Stellung der Mattscheibe und in der inoperativen Stellung der Filmbühneneinheit, die in Fig. 3 gezeigt sind, einen stumpfen Winkel zwischen sich einschließen; die übrigen Teile der Kamera außer einem Betätigungsgestänge sind in Fig. 3 nicht dargestellt;

Fig. 4 eine der Fig. 3 entsprechende Darstellung, wobei jedoch die Mattscheibe in ihrer inoperativen Stellung ist, während sich die Filmbühneneinheit in ihrer operativen Stellung befindet;

Fig. 5 den Filmverlauf in einer Kamera gemäß der Ausführungsform nach den Fig. 3 und 4, von oben gesehen;

Fig. 6 und 7 jeweils eine der Fig. 5 entsprechende Darstellung mit einer ersten Ausführungsform einer Schlaufenbildungseinrichtung, und zwar bei zwei verschiedenen Bewegungsphasen dieser Schlaufenbildungseinrichtung;

Fig. 8 eine der Fig. 5 entsprechende Ansicht, wobei jedoch eine andere Ausführungsform einer Schlaufenbildungseinrichtung vorgesehen ist;

Fig. 9 und 10 Darstellungen einer Ausführungsform der Abdichtung der Filmbühneneinheit gegen unerwünschtes Licht;

Fig. 11 eine Abwandlung der Ausführungsform nach den Fig. 3 und 4;

Fig. 12 eine Ausführungsform, bei welcher die Mattscheibe und die Filmbühneneinheit übereinander in einer gemeinsamen Ebene angeordnet und in dieser Ebene gemeinsam verschiebbar sind;

Fig. 13 den Filmverlauf bei einer Ausführungsform nach Fig. 12, die mit einer der Fig. 8 entsprechenden Schlaufenbildungseinrichtung versehen ist, gesehen von oben;

Fig. 14 eine Ausführungsform, bei welcher die Filmbühneneinheit um eine zur Längsrichtung des Films parallele Achse verschwenkbar ist;

Fig. 15 den Filmverlauf bei der Ausführungsform nach Fig. 14, gesehen von oben, wobei die Filmbühneneinheit in ihrer inoperativen Stellung ist;

Fig. 16 eine Aufsicht auf die Ausführungsform nach den Fig. 14 und 15 von oben, wobei eine den Fig. 8 und 13 entsprechende Schlaufenbildungseinrichtung vorgesehen ist und sich die Filmbühneneinheit in ihrer operativen Stellung befindet;

Fig. 17 und 18 Ansichten, welche der Fig. 16 entsprechen, wobei jedoch eine andere Ausführungsform einer Schlaufenbildungseinrichtung vorgesehen ist, welche der in den Fig. 6 und 7 gezeigten Ausführungsform entspricht;

Fig. 19 einen Längsschnitt durch eine Filmbühneneinheit, die mit einer von Lamellen gebildeten Abdeckung für den in der Filmbühneneinheit befindlichen Filmabschnitt versehen ist, welche sich beim Verschwenken der Filmbühneneinheit in die operative Stellung automatisch zusammenschiebt und damit den Filmabschnitt freigibt;

Fig. 20 eine Aufsicht auf die in Fig. 19 nur schematisch gezeigten Lamellen;

Fig. 21 eine Seitenansicht der in Fig. 20 gezeigten Lamellen;

Fig. 22 einen Schnitt durch eine Filmbühneneinheit, die im Prinzip der Filmbühneneinheit nach Fig. 19 entspricht, wobei jedoch anstelle der Lamellen ein Vorhang vorgesehen ist, der sich beim Verschwenken der Filmbühneneinheit in die operative Stellung von selbst aus dem Bereich des in der Filmbühneneinheit befindlichen Filmabschnitts herausbewegt;

Fig. 23 eine schematische Darstellung der in den Fig. 14 und 15 gezeigten Ausführungsform, von der Seite gesehen, wobei lediglich die operative und die inoperative Stellung der Filmbühneneinheit gleichzeitig dargestellt sind;

Fig. 24 eine der Fig. 23 entsprechende Darstellung, in welcher zusätzlich die Mattscheibe und deren Verbindung mit der Filmbühneneinheit gezeigt ist;

Fig. 25 eine Abdunklungseinrichtung zum Abdunkeln der Filmzuführungs- bzw. -abführungseinrichtung, die bei der Ausführungsform nach den Fig. 14 bis 24 vorgesehen sein kann;

Fig. 26 eine Ausführungsform, bei welcher die Mattscheibe und die Filmbühneneinheit in der gleichen Ebene nebeneinander angeordnet und an ihren senkrecht zur Längsrichtung des Films verlaufenden und aneinander anstoßenden Rändern starr miteinander verbunden sind, und zwar in der inoperativen Stellung der Filmbühneneinheit;

Fig. 27 eine der Fig. 26 entsprechende Darstellung, wobei sich jedoch die Filmbühneneinheit in der operativen Stellung befindet;

Fig. 28 eine Ausführungsform, bei welcher die Filmbühneneinheit um eine zur Längsrichtung des Films senkrechte Achse verschwenkbar ist, wobei sich die Filmvorratsspule und die Filmaufwickelspule in Längsrichtung des Films im wesentlichen auf der gleichen Seite der Filmbühneneinheit befinden, und zwar ist die Filmbühneneinheit in der inoperativen Stellung gezeigt;

Fig. 29 eine der Fig. 28 entsprechende Darstellung, wobei sich jedoch die Filmbühneneinheit in der operativen Stellung befindet;

Fig. 30 eine im Prinzip den Fig. 28 und 29 entsprechende Ausführungsform, die jedoch demgegenüber vereinfacht ist und bei der die Filmvorratsspule und die Filmaufwickelspule in Längsrichtung des Films auf den entgegengesetzten Seiten der in ihrer inoperativen Stellung befindlichen Filmbühneneinheit angeordnet sind; und

Fig. 31 eine gegenüber Fig. 22 abgewandelte Ausführungsform einer verschwenkbaren Filmbühneneinheit mit einem Vorhang zum Abdekken des in der Filmbühneneinheit befindlichen Filmabschnitts, wenn sich die Filmbühneneinheit in der inoperativen Stellung befindet.

Die Unterschiede der verschiedenen Ausführungsformen, auf die nachfolgend näher eingegangen wird, liegen unter anderem jeweils in der Art der Filmführung und -bauschung, sowie in der Abdichtung der Filmkammer gegen Licht aus Sucher bzw. Objektiv. Die Bewegung der Filmbühneneinheit und der Mattscheibe ist dem Prinzip nach in der ähnlichen Art der Bewegung des Rückschwingspiegels bei Spiegelreflexkameras gelöst. Leichte Federkraft drückt die Filmbühneneinheit bzw. auch die Mattscheibe konstant in die inoperative Stellung, die auch als Ruhestellung bezeichnet wird. Die Bewegung in die operative Stellung, die auch als Aufnahmestellung bezeichnet wird, erfolgt gegen die leichte Federkraft durch wesentlich stärkere Federkraft, die mit Erreichen der Aufnahmestellung und Arretierung der Filmbühneneinheit von dieser abgekuppelt wird. Nach der Belichtung löst sich die Arretierung, und die schwächere Feder drückt die Filmbühneneinheit in die Ruhestellung zurück. Bei allen dargestellten Versionen ist eine Kupplung der Filmbühneneinheit mit der Mattscheibe dargestellt, die einen synchronen Ablauf beider Glieder ermöglicht, wobei die auf ein Glied, nämlich die Mattscheibe oder die Filmbühneneinheit, einwirkende Kraft automatisch das andere Glied mitbewegt. Desgleichen wirkt eine Dämpfung der Erschütterung etwa bei der Mattscheibe automatisch auch auf die Filmbühneneinheit ein. Bei allen Ausführungsformen ist auf synchronen Ablauf der Bewegung der Filmbühneneinheit, der Mattscheibe und der Öffnung eventuell notwendiger Suchergehäuseabdichtungen geachtet. Ein zeitliches Nacheinander dieser Funktionen ist selbstverständlich ebenfalls möglich, wurde aber vermieden, um die Zeitspanne zwischen Auslösung und Belichtung auf ein Minimum zu verkürzen.

Die Art der Verstellbarkeit von Objektivstandarte und Kamerarückteil sollte den üblichen verstellbaren Kameras entsprechen. Die Erfindung bezieht sich insbesondere auf die neuartige Einheit von Sucher und Filmkammer, die am Kamerarückteil angebracht wird. Als Verschluß ist ein Zentralverschluß in den einzelnen Wechselobjektiven zu bevorzugen. Ein Verschluß vor der Mattscheibe bzw. der Filmbühne oder Filmhalterung in Aufnahmestellung müßte ein in starkem Maße modifizierter Schlitzverschluß sein. Aufgrund der notwendigen Dimensionen könnte ein Zentralverschluß vor der Mattscheibe allenfalls beim Kleinbildformat (24 × 36 mm) Verwendung finden.

Bei den Zeichnungen zu den verschiedenen Funktionen ist in keinem Fall Maßstäblichkeit beabsichtigt. Es soll jeweils nur das Funktionsprinzip deutlich gemacht werden. Details sind häufig im Maßstab der Deutlichkeit halber sehr übertrieben dargestellt.

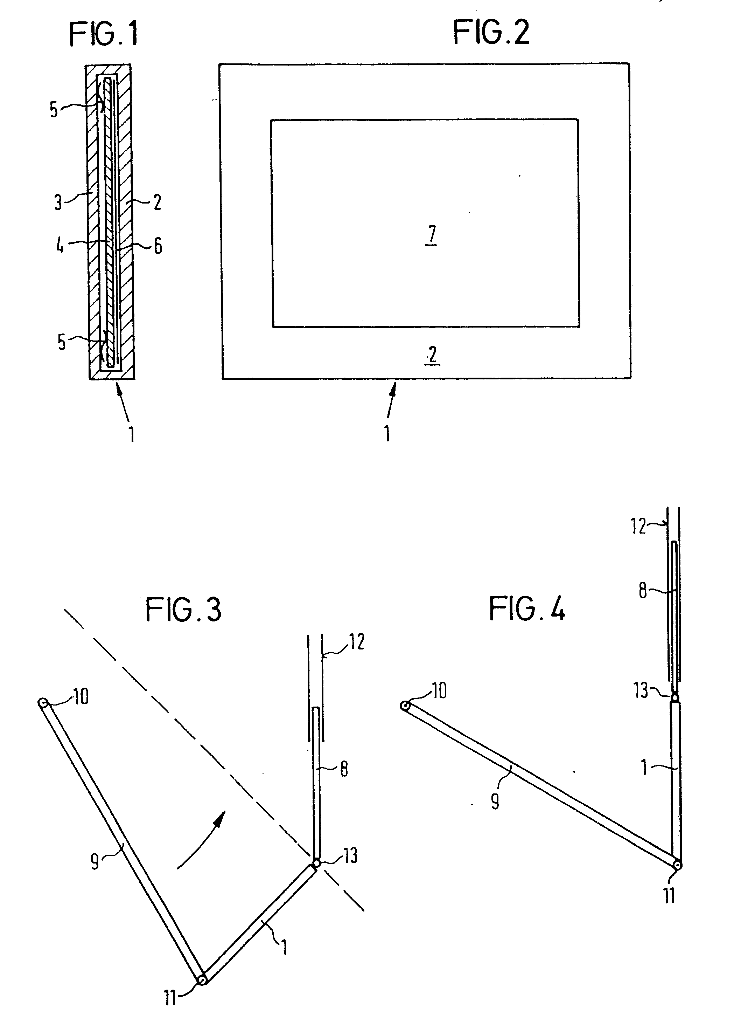

Die Fig. 1 zeigt eine Filmhalterung in Form einer Filmbühneneinheit von der Seite. Sie besteht aus dem Filmbühnenrahmen 2, einer Rückwand 3, einer Filmandruckplatte 4 und Federn 5, die die Filmandruckplatte 4 gegen den Film 6 und diesen gegen den Filmbühnenrahmen 2 pressen. Die Rückwand 3 ist in den wenigsten Fällen über die ganze Fläche ausgedehnt zu gestalten. Es genügen meist mit dem Filmbühnenrahmen 2 verbundene Widerlager für die Federn 5 der Filmandruckplatte.

Die Fig. 2 zeigt die Filmbühneneinheit von vorn. Man sieht nur den Filmbühnenrahmen 2 und durch die Filmbühnenöffnung 7 auf die Filmandruckplatte 4 bzw. den Film 6.

Die Fig. 3 und 4 zeigen bei einer ersten Ausführungsform eine Mattscheibe 8 und eine Filmbühneneinheit 1 von der Seite gesehen zusammen mit einem Führungshebel 9 zwischen einem ersten Gelenk 10 und einem zweiten Gelenk 11, welcher die Filmbühneneinheit 1 in Ruhestellung im 45-Grad-Winkel zur Mattscheibenebene hält. Der Führungshebel 9 kann beliebig verlängert und verkürzt werden, solange das Gelenk 10 auf der Mittelsenkrechten zur Filmbühneneinheit 1 in deren inoperativen oder Ruhestellung liegt. Die Mattscheibe 8 läuft senkrecht in einer schienenartigen Führung 12. Die Fig. 3 zeigt die Ruhestellung mit der im Gelenk 13 abgeknickten Filmbühneneinheit, durch welches die Mattscheibe 8 und die Filmbühneneinheit 1 miteinander verbunden sind und das beispielsweise ein Scharnier sein kann.

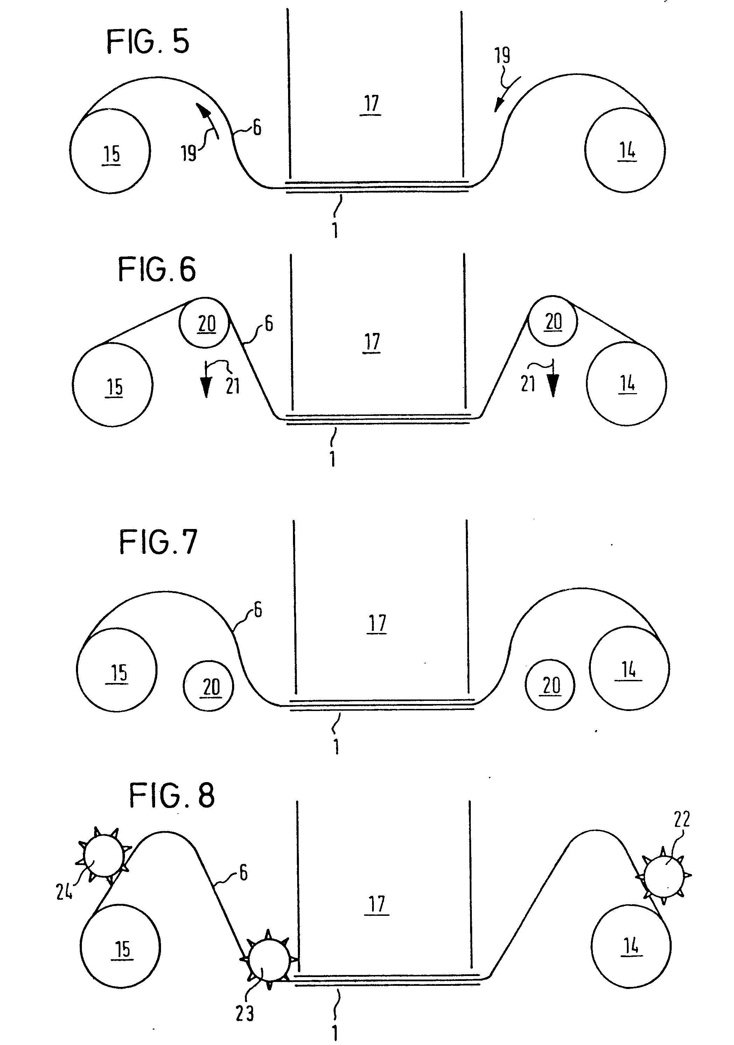

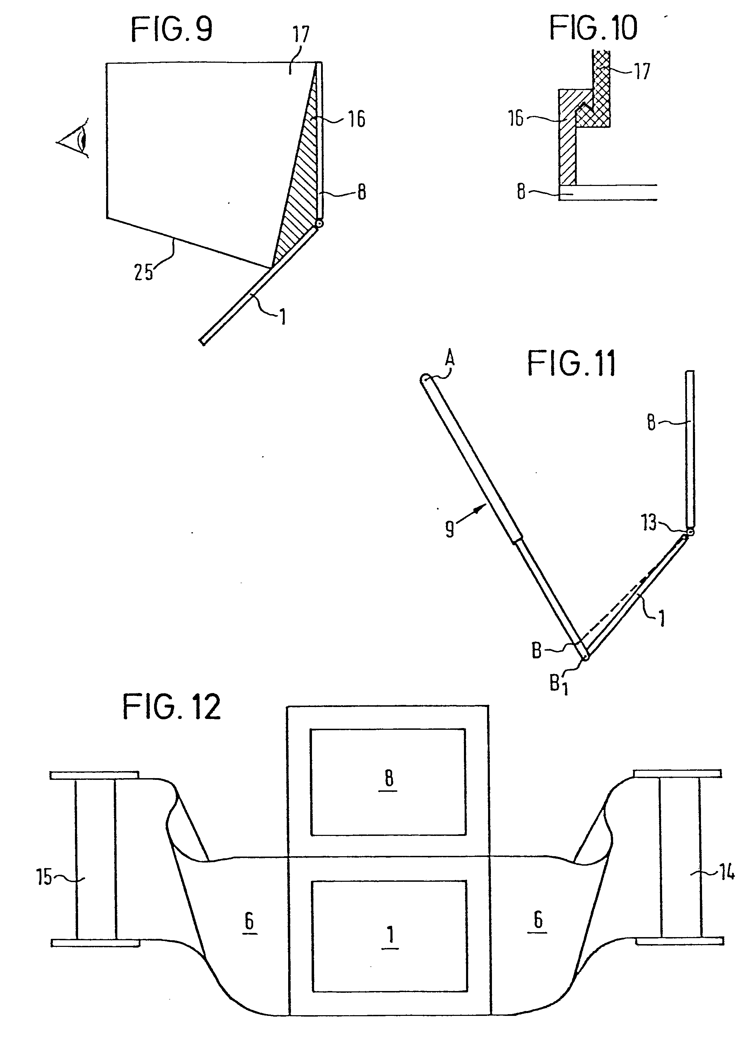

In dieser Ausführungsform ist also die Filmbühneneinheit 1 (Fig. 1 und 2) mit der Mattscheibe 8 bzw. deren Rahmen durch ein Gelenk 13 verbunden. Nach Betätigung des Auslösers wird die Mattscheibe 8, eventuell mit Fresnellinse, in der schienenartigen Führung 12 nach oben bewegt und zieht so die Filmbühneneinheit 1 in Aufnahmestellung. Die scharnierfreie Unterkante der Filmbühneneinheit 1 ist durch ein Gestänge, vorliegend den Führungshebel 9, gehalten, das bzw. der bewirkt, daß die Filmbühneneinheit 1 in Ruhestellung zur verlängerten Mattscheibenebene in einem 45-Grad-Winkel steht (Fig. 3). Zwei Filmspulen, nämlich eine Filmvorratsspule 14 und eine Filmaufwickelspule 15, sind beidseitig der Filmbühneneinheit 1 angeordnet, ebenfalls im 45-Grad-Winkel zur verlängerten Mattscheibenebene. Der Film 6 läuft durch die Filmbühneneinheit 1 und wird von der Filmandruckplatte 4 an die Filmbühne gepreßt. Um die Beweglichkeit der Filmbühneneinheit 1 für die Bewegung in die Aufnahmestellung und wieder zurück in die Ruhestellung zu gewährleisten, muß der Film 6 beidseitig der Filmbühneneinheit schlaufenartig nach rückwärts gebauscht sein (Fig. 5). In Ruhestellung muß der Film 6 lichtdicht geschützt sein. Die Rückwand 3 der Filmbühneneinheit 1 dichtet zusammen mit seitlich an der Mattscheibenrahmung angebrachten Schutzplättchen 16 das Suchergehäuse 17 ab (Fig. 9 und 10). Damit vollständige Dunkelheit im Suchergehäuse 17 gewährleistet ist, während sich die Filmbühneneinheit 1 in die Aufnahmestellung bewegt, ist zusätzlich zum Kameraverschluß ein Sucherokularverschluß notwendig. Mit Betätigung des Auslösers schließen sich Okularverschluß und Kameraverschluß synchron. Mit der Bewegung der Mattscheibe 8 öffnen sich die Sucherabdeckungen, und die Filmbühneneinheit 1 schwingt in Aufnahmestellung (Fig. 4). Jetzt erfolgt die Belichtung. Nachdem sich der Kameraverschluß wieder geschlossen hat, schwingen die Mattscheibe 8 und die Filmbühneneinheit 1 in Ruhestellung zurück, wodurch die Abdichtung des Suchers gegen die Filmkammer gewährleistet ist. Okularverschluß und Kameraverschluß öffnen sich wieder.

Für Okular- und Kameraverschluß dürfte ein Zentralverschluß die geeignetste Lösung sein, denn dieser muß nicht wie ein Schlitzverschluß nach jeder Aufnahme extra in die Ausgangsstellung zurückbewegt werden. Bei mehrfach schnell hintereinander erfolgendem Ablauf hat der Zentralverschluß sich bereits bei den Zentralverschluß-Spiegelreflexkameras bewährt. Sein Hauptnachteil ist, daß er in jedes Wechselobjektiv eingebaut werden muß und so dessen Preis verteuert. Das Spannen des Verschlusses könnte über einen die Objektivstandarte und das Gehäuse, d. h. das Film- und Suchergehäuse, verbindenden Kabelzug mit der Filmbeförderung zusammen erfolgen. Die Auslösung der verschiedenen Bewegungsimpulse bei der Aufnahme, besonders aber eines etwaigen Zentralverschlusses, sollte am praktikabelsten durch elektronische Steuerung erfolgen da die Übertragung der mechanischen Auslösung für den Verschluß im Objektiv vom Gehäuse her kaum lösbare Schwierigkeiten mit sich bringen würde.

Die Verwendung eines Schlitzverschlusses vor der Filmbühne bzw. Mattscheibe wäre denkbar, wenn bei diesem der Verschlußablauf anstelle nur in einer Richtung auch in die Gegenrichtung möglich ist, so der Ablauf der Aufnahmefunktionen beschleunigt wird, oder wenn das mehrfache Spannen des Verschlusses durch motorischen Antrieb derart geschwind erfolgt, daß beim Ablauf der Aufnahme keine Verzögerung entsteht.

Die Fig. 5 zeigt die Filmbauschung aus der Betrachtungsebene, die in Fig. 3 als gestrichelte Linie wiedergegeben ist. 17 ist der Sucher, 1 die Filmbühneneinheit, 14 und 15 sind die beiden Filmspulen, 6 ist der Film, und die beiden Pfeile 19 zeigen die Laufrichtung des Films 6 an. Die Fig. 6 gibt die gleiche Betrachtungsebene wie die Fig. 5 wieder. Hier sind zwei Umlenkrollen 20 während der Filmbeförderung gezeigt, die zur Schlaufenbildung dienen. Durch die Pfeile 21 wird die Richtung angezeigt, in der sie nach Beendigung der Filmbeförderung bewegt werden.

Die Fig. 7 zeigt die Filmbauschung nach der Filmbeförderung bei Aufnahmebereitschaft. Die Umlenkrollen haben sich in die in Fig. 6 angezeigte Richtung bewegt.

Die Fig. 8 zeigt eine Möglichkeit zur Filmbauschung, d. h. zur Schlaufenbildung, bei perforiertem Film 6. Hier greifen doppelte Zahnkränze 22, 23 und 24 in den oberen und unteren Perforationsrand des Films 6 ein und zwar an drei Stellen. Der erste Zahnkranz 22 direkt hinter der Filmvorratsspule 14, zum Beispiel einer Filmpatrone, der zweite Zahnkranz 23 an der Stelle, wo der Film 6 wieder aus der Filmbühneneinheit 1 heraustritt, und zwar müßte sich dieser Zahnkranz 23 mit der Filmbühneneinheit 1 mitbewegen, um eine Verletzung der Perforation, die durch rasches Ein- und Ausspringen der Perforation aus dem Zahnkranz 22 leicht möglich wäre, zu verhindern. Der Zahnkranz 23 müßte demnach aus einer Führung und wieder in diese zurückspringen. Aus diesem Grund ist allzugroße Leichtgängigkeit des Zahnkranzes 23 zu vermeiden, damit er in gleicher Stellung, in der er seine Führung verlassen hat, in diese zurückspringt. Der dritte Zahnkranz 24 befindet sich kurz vor der Filmaufwickelspule 15, wie auch sonst bei Kleinbildkameras üblich.

Bei gleicher Zahnkranzgröße und bei absolut gleicher Geschwindigkeit der Zahnkränze 22, 23 und 24 verändert sich die einmal festgelegte Filmbauschung bzw. -schlaufe beim Weitertransport nicht mehr. Eventuell muß der Film 6 durch eine entsprechende Führung an die Zahnkränze 22, 23 und 24 angepreßt werden, um ein Herausspringen des Films 6 zu verhindern.

Da bei Filmen, wie etwa den 35-mm-Kleinbildfilmen, dieser wieder in seine lichtdichte Filmpatrone zurückgespult werden muß, er also am Ende fest mit der Filmvorratsspule 14 verbunden ist, kann das letzte Filmstück, das für die Bauschung bei der Filmpatrone benötigt wird, nicht mehr in die Filmbühneneinheit 1 gelangen. Es gibt also einen gewissen Filmverlust für die Bauschung. Um den Filmverlust durch einen langen Filmvorspann beim Einlegen des Films 6 in die Kamera zu vermeiden, ist es eventuell empfehlenswert, ein wie der Film 6 perforiertes dauerhaftes Gewebeband fest an der Filmaufwickelspule 15 mit einem Verschluß am freien Ende anzubringen, in den der Filmanfang direkt hinter der Filmbühneneinheit 1 eingehängt wird; der Film 6 muß also nicht voll bis zur Filmaufwickelspule 15 durchgezogen werden. Die genauen Maße für die notwendige Bauschung bzw. Schlaufengröße hängen weitgehend von der Breite des verwendeten Filmmaterials ab. Bei Rollfilmverwendung würde es sich empfehlen, den Rollfilm in lichtdichte Filmpatronen, in der Art der bei Kleinbildfilmen üblichen Patronen, zu stecken, wo der Film aus einem lichtdicht abschirmenden Schlitz heraustritt. Dadurch könnte Papiervorspann bis zum Filmbeginn gefahrlos abgerollt werden.

Das Suchergehäuse sollte derart gestaltet sein, daß die Bauschung und Bewegung des Films 6 nicht behindert wird. Der Boden 25 des Suchergehäuses 17 muß sich, wie Fig. 9 zeigt, in voller Breite hinter der Mattscheibe 8 in einem breiten Spalt öffnen, die Seitenwand an ihrer Fußkante in einer Öffnung der Breite des Bodenspalts, die nach oben spitz zuläuft. Damit nach Schließung von Okular- und Kameraverschluß die Bewegung der Mattscheibe 8 und der mit ihr verbundenen Filmbühneneinheit 1 nicht verzögert wird, kann die Abdeckung der Öffnung des Suchergehäuses 12, nämlich der Teil der Seitenwandabdeckung, welcher das Schutzplättchen 16 bildet, mit der Mattscheibe 8 verbunden sein und von dieser dergestalt mit nach oben genommen werden, daß die Filmbühneneinheit 1 ohne Schwierigkeit durch die Öffnung schwingen kann. Um eine aufwendigere Abdeckung der Öffnung des Suchergehäusebodens 25 zu vermeiden, kann dieser dergestalt nach unten gezogen werden, daß der breite Bodenspalt von der entsprechend lichtdicht zu gestaltenden Rückwand 3 der Filmbühneneinheit 1 abgedeckt wird. Dadurch bedingt, muß die Seitenwand des Suchergehäuses 17 und die seitlich am Mattscheibenrahmen befindliche Seitenwandabdeckung in Form des Schutzplättchens 16 (schraffierte Fläche) etwas nach unten gezogen werden, um die Lücke zu schließen.

Da die Mattscheibe 8, wie Fig. 10 zeigt, und die mit ihr verbundene, als Schutzplättchen 16 ausgebildete Seitenwandabdeckung in einer schienenartigen Führung senkrecht nach oben läuft, müssen Schutzplättchen 16 und Seitenwand des Suchergehäuses 17 seitlich versetzt sein.

Der Führungshebel der Filmbühneneinheit 1, der sich zwischen den Punkten A und B erstreckt, könnte sich, wie Fig. 11 zeigt, durch eine Federung über B hinaus teleskopartig nach B1 ausziehen, was erstens für eine Abdämpfung der Bewegung der Filmbühneneinheit kurz vor Erreichen der Aufnahmestellung und für eine sicherere Planlage der Filmbühne 1 sorgen würde.

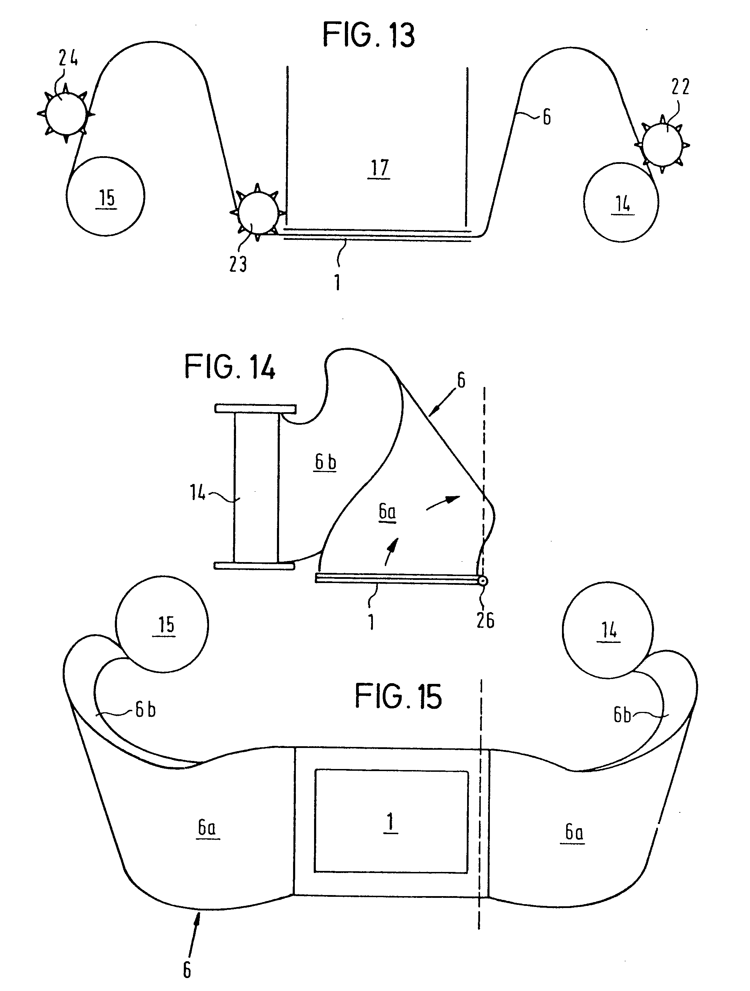

Die Fig. 12 und 13 beziehen sich auf die weitere Ausgestaltung. Die Mattscheibe 8 und die Filmbühneneinheit 1 sind hier unverwinkelt übereinander angeordnet und in der Rahmung einheitlich zusammengefaßt (siehe Fig. 12). Die gesamte Rahmung läuft in einer schienenartigen Führung. Bei entsprechend lichtdichter Verzahnung mit den Seitenwänden des Suchergehäuses 17 gibt es keinerlei Abdunklungsprobleme. Aus diesem Grund besteht die Möglichkeit, bei mitlaufendem Verschlußlamellenteil eines entsprechend zu modifizierenden Metallamellenschlitzverschlusses auf den Okularverschluß zu verzichten und den in Aufnahmestellung in seinen Antrieb eingerasteten Verschluß nur einmal bei der Aufnahme ablaufen zu lassen.

Die Filmspulen 14 und 15 sind um die halbe Höhe der von der Filmbühneneinheit 1 zurückzulegenden Strecke gegenüber der Filmbühneneinheit 1 erhöht. Fig. 12 zeigt die Filmbühneneinheit 1 mit der Mattscheibe 8 und den Film 6 zwischen den Filmspulen 14 und 15 in Voderansicht. In Aufnahmestellung stehen die Filmspulen 14, 15 gegenüber der Filmbühneneinheit 1 um dieselbe Strecke erneidrigt. Da bei dieser Art der Filmhaltung eine stärkere Torsion des Filmmaterials gegeben ist, muß diese durch verstärkte Bauschung, die wiederum Filmverlust bedeutet, abgemildert werden.

Wie die Fig. 13 zeigt, ist die Filmstellung am leichtesten von oben gesehen darzustellen, wenn sie bei dem Punkt der Bewegung dargestellt wird, wo die Filmbühneneinheit 1 die halbe Strecke in Richtung Aufnahmestellung bzw. Ruhestellung zurückgelegt hat. Wegen der Torsion des Films 6 in Ruhe- und Aufnahmestellung ist die Bauschung bzw. Schlaufenbildung beim Filmtransport, etwa durch Umlenkrollen, um die der Film 6 läuft, schwer herzustellen. Es empfiehlt sich deshalb, bei dieser Version nur perforierten Film zu verwenden und die Bauschung durch gleich schnell den Film 6 transportierendende Zahnkränze 22, 23 und 24 zu bewirken wie bei Fig. 8. Der Film 6 muß durch entsprechende Führungen an die Zahnkränze 22, 23 und 24 gedrückt werden. Im übrigen sei auf die Ausführungen zu Fig. 8 über Filme mit Perforation verwiesen. Im einzelnen ergibt sich für die Ausführungsform nach den Fig. 12 und 13 folgende Funktionsweise:

In Ruhestellung dichtet die Mattscheibenrahmung das Suchergehäuse 17 problemlos lichtdicht ab. Der Aufnahmevorgang verhält sich hier wie bei der Ausgestaltung nach den Fig. 3 bis 11. Der Okularverschluß und der Kameraverschluß schließen sich. Die komplette Einheit aus Mattscheibe 8 und Filmbühneneinheit 1 bewegt sich, bis die Filmbühneneinheit 1 die Aufnahmestellung erreicht hat. Der Kameraverschluß öffnet und schließt zur Belichtung. Die Einheit aus Mattscheibe 8 und Filmbühneneinheit 1 bewegt sich zurück in Ruhestellung. Okular- und Kameraverschluß öffnen sich. Wie in der Ausgestaltung nach den Fig. 3 bis 11 sind die beiden Filmspulen 14, 15 rechts und links der Filmbühneneinheit 1 angeordnet, allerdings gegenüber dieser um die halbe Strecke erhöht, die von der Filmbühneneinheit 1 zur Aufnahmestellung zurückgelegt werden muß. Der Film 6 ist nach rückwärts schlaufenartig gebauscht, allerdings in noch stärkerem Maße als bei der Ausgestaltung nach den Fig. 3 bis 11, da dies die senkrechte Verschiebung der Filmbühneneinheit 1 erforderlich macht; hierin liegt auch der Grund für die erhöhte Anordnung der Filmspulen 14, 15, die die Torsion des Filmmaterials beim Aufnahmevorgang mildern soll. Für Okular- und Kameraverschluß gilt das gleiche wie für die Ausgestaltung nach den Fig. 3 bis 11 mit einem Metallamellenschlitzverschluß, der so ausgebildet ist, daß die Verschlußlamellen mit ihrer Frontplatte an die Filmbühneneinheit 1 fest angebaut werden können und die Verschlußlamellen erst bei erreichter Aufnahmestellung in ihre Verbindung zum Verschlußantrieb einrasten, ist nur ein einziger Verschlußablauf notwendig, und auf den Okularverschluß kann dann verzichtet werden.

Es sei nun auf die Fig. 14 bis 25 näher eingegangen, die eine noch andere Ausführungsform zeigen, die sich dadurch auszeichnet, daß die Filmbühneneinheit 1 um eine durch ihre Fußkante (oder eine parallele Linie in deren Nähe) gebildete Schwenkachse 26 in Aufnahme- bzw. Ruhestellung schwingt. Die gleichzeitig erfolgende Bewegung der Mattscheibe 8 ist in ihrer Richtung nur insoweit definiert, als sie den Sucher freizugeben hat und weder den Ablauf der Bewegung der Filmbühneneinheit 1 noch die Verstellbarkeit der Kamera bezüglich Verschwenkung und Verschiebung beeinträchtigen darf. Die beiden Filmspulen 14, 15, über die sich der durch die Filmbühneneinheit 1 laufende Film 6 bei entsprechender Bauschung zwischen der Filmspule 14 bzw. 15 und der Filmbühneneinheit 1 auf- bzw. abspult, haben ihre Stellung beidseitig der Filmbühneneinheit 1 und somit des Suchergehäuses. Die Filmbühneneinheit 1 muß ihre Schwungbewegung bei entsprechendem Lichtschutz für den Filmabschnitt in der Filmbühneneinheit 1 und für den Film 6 in der Filmkammer ausführen.

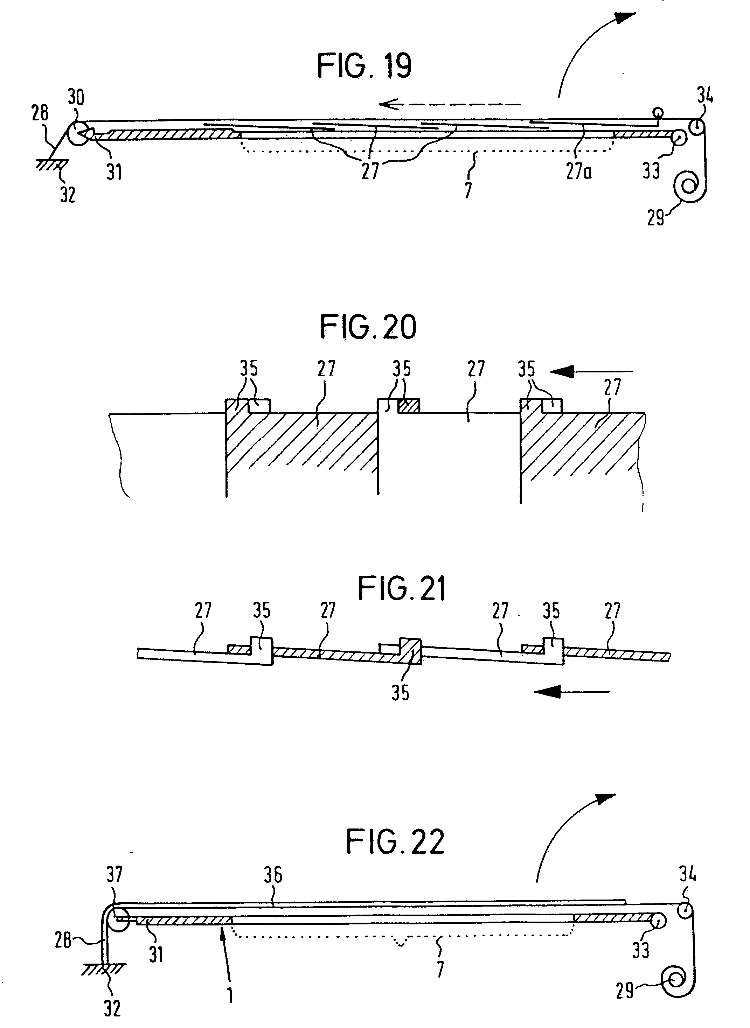

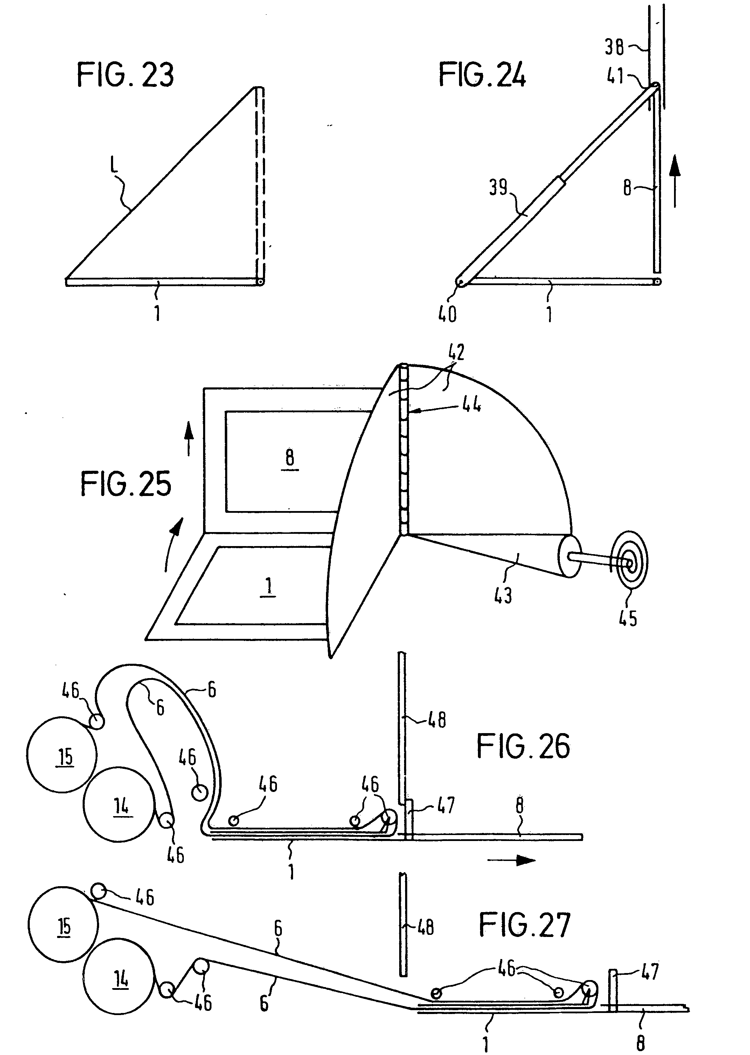

Der problematischste Teil bei dieser Version ist — das Suchergehäuse soll hier als kubusähnliche Form angenommen werden — die Abdunklung gegenüber der Filmkammer. Es müssen der Boden und die beiden Seitenwände des Suchergehäuses in weiten Bereichen geöffnet werden, um der Filmbühneneinheit den Weg in die Aufnahmestellung freizugeben. Für die Seitenwände bietet sich, da die Bewegung um eine Achse erfolgt, vor der Filmbühneneinheit eine Kreissektorscheibe an, in der Spitze ebenfalls an der Filmbühnenachse drehbar gelagert, wobei die Sektorscheibe von der Filmbühneneinheit geschoben bzw. gezogen wird. Eine Sektorscheibe mit einem derartig großen Kreisradius bringt aber Schwierigkeiten insofern mit sich, als diese, in Aufnahmestellung zu weit vor die Filmebene reichend, die Verstellbarkeit des Objektivs beeinträchtigen würde. Es ist daher zu bevorzugen, um eine Achse drehbar angeordnete sehr schmale Kreissektorlamellen vorzusehen, die bei Ruhestellung miteinander verzahnt, die Seitenwände gegen Licht abdichten, oder aber Rollos, in ausgezogener Form kreissektorförmig, die bei Bewegung in Aufnahmestellung von einer kegelförmigen Spule aufgerollt, bei Bewegung in Ruhestellung abgerollt würden (Fig. 25). Die Lichtabdichtung der Bildöffnung der Filmbühne kann durch an Kabelzügen aufgehängte Lamellen erfolgen. Die Schließung der Lamellen erfolgt, indem die Lamellen in Richtung Filmbühnenunterkante (die die annähernde Achse der Filmbühnenbewegung bildet) durch federnden Kabelzug auseinandergezogen werden, was die Lichtabschirmung bewirkt. Ein starrer Kabelzug, der sich durch die Bewegung der Filmbühneneinheit in Richtung Aufnahmestellung verkürzt, schiebt die Lamellen so zusammen, daß die Bildöffnung der Filmbühne bei Erreichen der Aufnahmestellung voll geöffnet ist (Fig. 19 bis 21). Durch einen in gleicher Weise gestalteten Kabelzug kann auch ein flexibler Vorhang mittels Rollen über die Filmbühnenoberkante gezogen werden (Fig. 22 und 23). Bei der hier angewandten Art der Bewegun der Filmbühneneinheit ist wiederum ein Sucherokularverschluß notwendig, um den Film während der Bewegung in Aufnahme- und wieder zurück in Ruhestellung vor Licht zu schützen. Der Ablauf der einzelnen Funktionen verläuft wie gewohnt. Der Okularverschluß schließt sich synchron mit dem Kameraverschluß. Die Filmbühneneinheit schwingt in Aufnahmestellung, während die Mattscheibe den Suchergang verläßt (die Richtung, in der sie sich entfernt, ist dabei unerheblich; eine mechanische Kupplung von Filmbühneneinheit und Mattscheibe, die für den synchronen Ablauf beider Bewegungen sorgt, ist durch einfache Hebelverbindung leicht möglich. Der Verschluß öffnet und schließt sich zur Belichtung, die Filmbühneneinheit bewegt sich in Ruhestellung zurück, wodurch die Filmkammer und die Filmbühne wieder gegen Licht abgeschirmt sind, Okular- und Kameraverschluß öffnen sich wieder. Für die Art des Kameraverschlusses gilt auch hier das bereits bei der weiteren Ausgestaltung zu den Fig. 3 bis 11 gesagte. Zur Filmbühnenbeweglichkeit muß auch hier der Film schlaufenförmig gebauscht werden, allerdings diesmal in Richtung Kamerafront. Da die genaue Spulenstellung (90-Grad-Winkel zur Filmbühneneinheit in Ruhestellung) und Filmbauschung hier schwer zu beschreiben ist, wird auf die entsprechenden Zeichnungen (Fig. 14 und 15) hingewiesen.

Nun seien die Fig. 14 bis 25 in näheren Einzelheiten erläutert:

Die Fig. 14 zeigt im Schnitt entlang der gestrichelten Linie in Fig. 15 die Filmvorratsspule 14, den Filmverlauf und die Filmbühneneinheit 1. 6a ist die Filmschicht, 6b die Filmrückseite. Durch die Bewegung der Filmbühneneinheit 1 (Pfeilrichtung) werden weitgehende Vorbedingungen für die Suchergestaltung gestellt, da optische Elemente (Linsen, Prismen, Spiegel) erst hinter dem Bereich des Drehradius der Filmbühneneinheit 1 eingebaut werden können. Ein möglichst kleiner Drehwinkel wäre, um die Bewegung abzukürzen, wünschenswert. Die Filmspulen 14, 15 stehen um 90 Grad gedreht oberhalb der Filmbühneneinheit 1. Die gestrichelte Linie deutet die Bild- bzw. Fokussierebene an.

Die Fig. 15 zeigt den Filmverlauf bei Ruhestellung in Ansicht von oben. Die gestrichelte Linie zeigt, wie schon erwähnt, die Schnittebene von Fig. 14. Die hier mit der Filmbühnenöffnung nach oben blickende Filmbühneneinheit 1 bildet die Unterseite, gewissermaßen den Boden, des hier weggelassenen Suchergehäuses. Der Film verläuft wie sonst von der Filmspule 14 zur Filmspule 15.

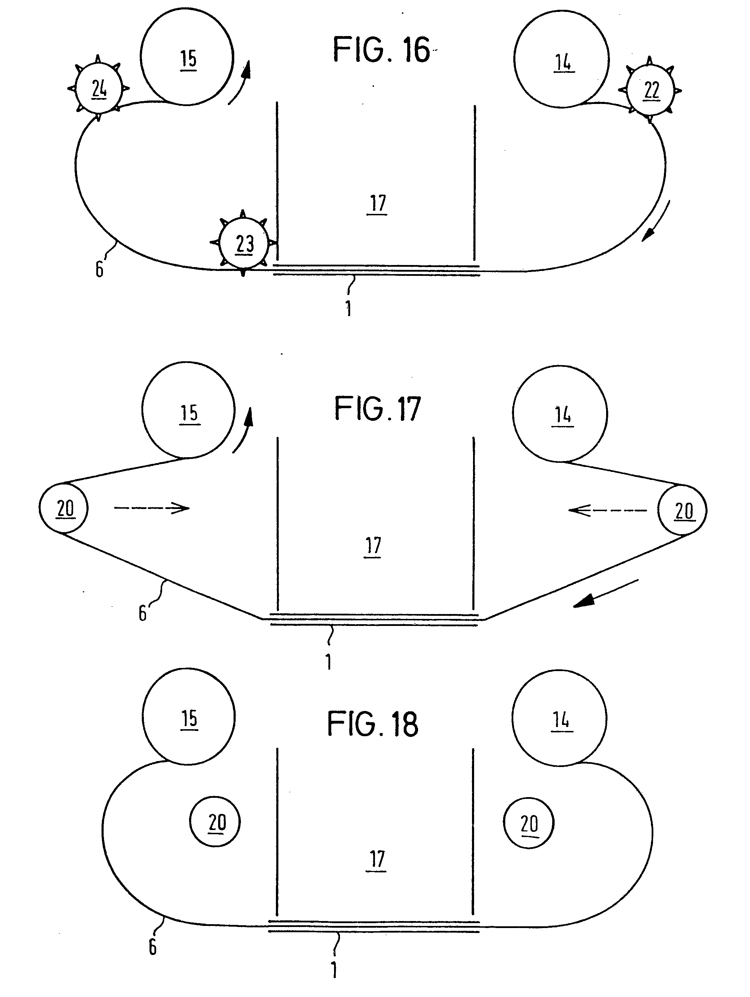

Die Fig. 16 bis 18 zeigen Möglichkeiten der Filmbauschung, dargestellt bei Aufnahmestellung. Der Film 6 verläuft jeweils in Pfeilrichtung durch die Filmbühneneinheit 1 von der Filmspule 14 nach der Filmspule 15. Die Torsion des Films 6 in Ruhestellung macht eine weite Bauschung bzw. Schlaufenbildung notwendig. Bei Aufrechterhaltung der entsprechenden Bauschung den Film zu transportieren, scheint in Ruhestellung nur mit den in Fig. 16 wiedergegebenen Zahnkränzen 22, 23 und 24 möglich. Die Fig. 16 gibt allerdings aus Gründen der leichteren Darstellbarkeit die Aufnahmestellung wieder. Das bezüglich der Zahnkränze 22, 23 und 24 und der Perforation zu Fig. 8 gesagte trifft auch für die vorliegende Ausführung zu. Die Fig. 17 und 18 zeigen die Aufrechterhaltung der Bauschung durch Umlenk- bzw. Spannrollen 20, Fig. 17 während der Filmbeförderung (der gestrichelte Pfeil gibt die Bewegungsrichtung der Umlenk- bzw. Spannrollen 20 aus der Ruhestellung an), Fig. 18 direkt danach bzw. während der Aufnahme.

Wie die Fig. 19 bis 23 zeigen, dichtet die Filmbühneneinheit 1 den Boden des Suchergehäuses ab. Es muß also in Ruhestellung noch die Filmbühnenöffnung gegen Licht geschützt werden.

Es empfehlen sich sehr dünne Metallverschlußlamellen 27, die in einer schienenartigen Führung laufend sich bei Bewegung der Filmbühneneinheit 1 in ihre Aufnahmestellung zusammenschieben. Das wird wie folgt erreicht: (Fig. 19): Die äußerste (oberste) Lamelle 27a wird von zwei Kabelzügen 28 und 29 gehalten. Der eine Kabelzug 29 zieht die Lamellen 27 in Normalstellung durch leichte Federkraft auseinander, so daß die Bildöffnung bzw. der darin befindliche Filmabschnitt geschützt ist. Der andere starre Kabelzug 28, der auf Rollen 30 über die obere frei schwingende Kante 31 der Filmbühneneinheit 1 geführt wird, ist am Gehäuse 32 befestigt und zieht bei Bewegung in Aufnahmestellung die Lamellen 27 in Richtung Filmbühnenoberkante 31 zusammen. Beim Zurückschwingen in Ruhestellung zieht der federnde Kabelzug 29 die Lamellen 27 wieder auseinander. Die Schwenkachse 26 ist ein Scharnier 33 der Filmbühneneinheit 1, 34 ist eine Kabelzugrolle und 7 die Filmbühnenöffnung. Das gleichmäßige Zusammenschieben der Lamellen 27 wird durch kleine Mitnehmer 35 am Lamellenrand bewerkstelligt (Fig. 20 von oben, Fig. 21 von der Seite gesehen).

Mechanisch noch einfacher (siehe Fig. 22) läßt sich die Abdunklung der Filmbühnenöffnung 7 durch einen Vorhang 36 aus flexiblem Gewebe anstelle der Lamellen 27 bewerkstelligen, der über Rollen 37 über die frei schwingende Oberkante 31 der Filmbühneneinheit 1 gezogen wird, da das freie Ende seines Kabelzugs 28 am Gehäuse 32 befestigt ist.

Wenn die Bewegung der Filmbühneneinheit, was der Normalfall sein dürfte, einen 90-Grad-Winkel umfaßt, ist die Strecke, die der Vorhang 36 nach Fig. 22 bzw. der starre Kabelzug 28 nach Fig. 19 über die Filmbühneneinheitsoberkante 31 gezogen wird, wesentlich länger als die Länge der Filmbühnenöffnung 7, die abzudecken ist. Die Fig. 23 zeigt die Filmbühneneinheit 1 in waagerechter Ruhestellung und in senkrechter Aufnahmestellung. Die Verbindung L der freien Enden ergibt die Strecke, die der Vorhang bzw. der Kabelzug herausgezogen werden. Der Vorhang bzw. der Kabelzug müßte also entsprechend verlängert werden und sollte sich am besten bei 32 durch Federkraft aufrollen. Die Federkraft kann schwächer sein als bei 29. Der Vorhang bzw. der Kabelzug würde sich nur bis zu einem Anschlag von der Filmbühneneinheit abrollen, dann würde sich die dazu vorgesehene Rolle bei 32 abrollen.

Die Fig. 24 zeigt eine Gestängeverbindung zwischen der Filmbühneneinheit 1 und der Mattscheibe 8. Der Pfeil zeigt die Bewegungsrichtung der Mattscheibe 8 an. Die Mattscheibe 8 läuft in einer schienenartigen Führung 38. Die Hebelverbindung 39 zwischen den Gelenken 40 und 41 würde, wenn ihre Länge unveränderlich wäre, die Mattscheibe 8 unnötig weit bewegen, weshalb sie vorzugsweise als federnde Teleskopverbindung ausgebildet ist, die sich, nachdem die Mattscheibe 8 ihren Endanschlag erreicht hat, federnd zusammenschiebt.

Die Fig. 25 zeigt eine Möglichkeit der Abdunklung der Filmzuführungs- und -abführungseinrichtung. Bei der Drehung der Filmbühneneinheit 1 um die Achse in der Nähe der Fußkante (mit »Nähe« soll nur gesagt werden, daß die Drehachse nicht genau in der Filmebene liegen muß, sondern auch etwas davor oder dahinter liegen kann) müssen sich die Seitenwände des als annähernd kubisch angenommenen Suchergehäuses in der ganzen Fläche des von der Schwingbewegung umfaßten Kreissektors öffnen. Eine von der Filmbühneneinheit 1 geschobene Kreissektorscheibe ist nicht möglich, da sie vorn über die Fokussierebene ragen und die Verstellbarkeit des Objektivs beeinträchtigen würde. Es wird deshalb ein Rollo 42 aus lichtdichtem Stoff in Sektorform vorgeschlagen, das auf einer kegelförmigen Spule 43 aufgewickelt wird; die Spule 43 dreht sich durch Federkraft. Da eine entsprechende Spule 43 neben der Filmbühne 1 in Aufnahmestellung stören dürfte, empfiehlt es sich, das Rollo 42 um 90 Grad abgewinkelt erst unter der Fußkante der Filmbühneneinheit 1 aufzurollen. Eigentlich müßte auch die umleitende Rolle 44 kegelförmig zulaufen, doch gibt es auch die Möglichkeit, auf einer Achse eine Reihe einzelner, kleiner Rollen vorzusehen, die sich nebeneinander drehen und sich der vom Rand in Richtung Drehachse der Filmbühneneinheit 1 vermindernden Bewegungsgeschwindigkeit des Rollos 42 angleichen können. Das Rollo 42 muß am Außenrand in einer der Seitenwand des Suchergehäuses verbundenen lichtdichten Führung laufen. Bei 45 ist eine federnde Aufhängung für den Aufrollmechanismus der kegelförmigen Spule 43 dargestellt. Der gebogene Pfeil gibt die Bewegungsrichtung für die Filmbühneneinheit 1, der gerade die für die Mattscheibe 8 an.

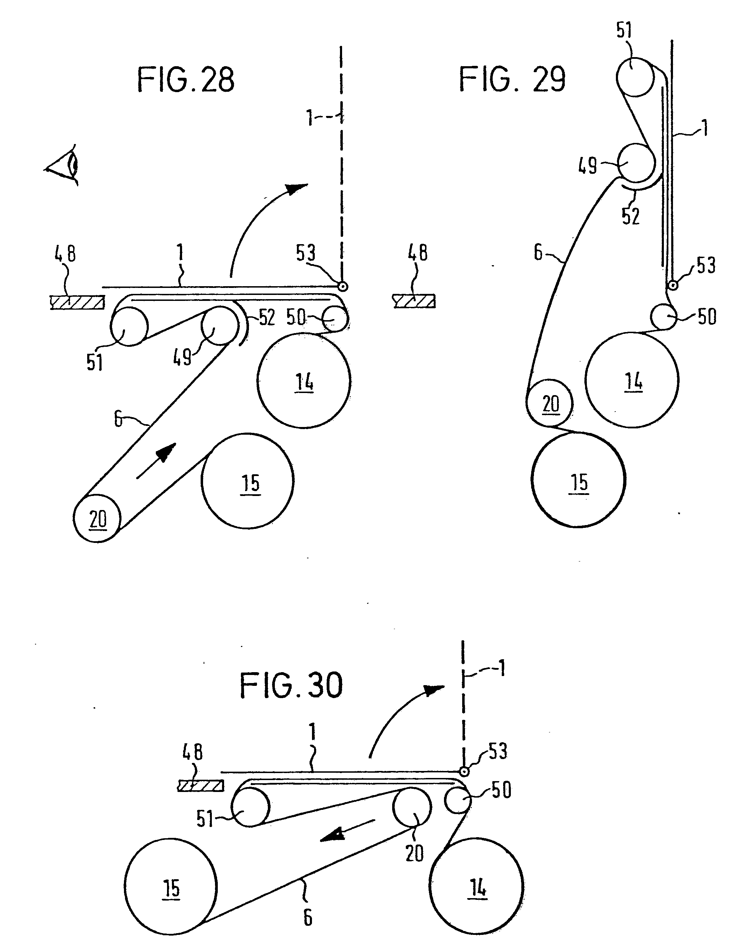

Die Fig. 26 und 27 zeigen eine Ausführungsform, die sich insbesondere dadurch auszeichnet, daß die Mattscheibe und die Filmbühneneinheit unverwinkelt nebeneinander angeordnet sind und so bei Bewegung in Aufnahme- bzw. Ruhestellung ohne Richtungsänderung in einer Ebene seitlich verschoben werden. Die horizontal verlaufende Bewegung bei horizontalem Filmverlauf macht eine Rückführung des Films auf der Rückseite der Filmbühneneinheit erforderlich. Beide Filmspulen befinden sich auf einer Seite des Suchergehäuses, wobei die zu den entsprechenden Spulen gehörenden Filmabschnitte in Ruhestellung (zumindest nach dem Filmtransport) gebauscht sein müssen, um die Bewegung der Filmbühneneinheit zu gestatten. Während des Bewegungsablaufs für die Aufnahme sowie in Ruhestellung muß der Film durch entsprechende Abdunklung gegen Licht aus Sucher und Objektiv geschützt sein.

Hier wird die Filmbühneneinheit nicht wie bei den bisherigen Beispielen annähernd quer zur Laufrichtung des Films bewegt, sondern längs (Fig. 26 und 27). Wie bei der Ausgestaltung nach den Fig. 12 und 13 bilden Mattscheibe und Filmbühneneinheit eine starre unverwinkelte Einheit, die in ihrer Gesamtheit bewegt wird. Da sich der Film in Laufrichtung bewegt, reicht ein einfaches Durchziehen durch die Filmbühneneinheit nicht aus. Der Film muß auf der Rückseite der Filmbühneneinheit zurückgeführt werden, damit er nach Ablauf des Aufnahmevorgangs nicht im Suchergehäuse verbleibt. Aus diesem Grund muß von der Filmbühneneinheit noch eine Rolle (bzw. Zahnkränze für die Perforation) mitgeführt werden, über die der Film zu seiner Filmaufwickelspule zurückgeführt wird. Abdichtungsprobleme zwischen Filmkammer und Suchergehäuse sind gering. Die Abdichtung besteht aus einer quer zur Mattscheibenebene zwischen Mattscheibe und Filmbühneneinheit angebrachten Platte, die die Öffnung abdichtet, durch die die Rolle bei Bewegung in Aufnahmestellung in das Suchergehäuse tritt, über die der Film auf der Rückseite der Filmbühneneinheit zurückgeleitet wird.

Da sich beide Filmspulen auf einer Seite der Filmbühne befinden, würde das Problem der notwendigen Bauschung des Films in Schlaufen, um die Bewegung der Filmbühneneinheit zu garantieren, aus Platzgründen zu Schwierigkeiten führen. Deshalb erscheint es bei dieser Lösung am praktischsten, die Filmförderung bei Aufnahmestellung durchzuführen, da in diesem Zustand die Bauschung aufgehoben ist. Die Filmbeförderung erfolgt dann durch einfaches Weiterziehen des Films. Die Bauschung bei Bewegung in Ruhe- (bzw. Sucherbetrachtungs-)-stellung ergibt sich so problemlos wie von selbst und muß nicht über spezielle Glieder, die die Bauschung beim Weitertransport gewährleisten, künstlich erhalten werden. Der Ablauf der einzelnen Funktionen erfolgt in gewohnter Weise. Mit Betätigung des Auslösers schließen sich der wiederum erforderliche Sucherokularverschluß und der Kameraverschluß synchron. Die Einheit, bestehend aus Mattscheibe und Filmbühneneinheit, wird in Aufnahmestellung bewegt, die Belichtung erfolgt durch Öffnen und Schließen des Verschlusses. An dieser Stelle sollte der durch die Auslösung betätigte Bewegungsablauf abgebrochen werden. Die weitere Bewegung, die wieder die Sucherbetrachtung ermöglicht, sollte durch Betätigung des Spannhebels erfolgen, aber erst nach dem Filmtransport, und zwar zunächst die Bewegung der Einheit aus Mattscheibe und Filmbühneneinheit in Ruhestellung, sodann Öffnung von Okular- und Kameraverschluß. Für den Kameraverschluß gilt wiederum das bei der Ausgestaltung nach den Fig. 3 bis 11 gesagte. Wie in der Ausgestaltung nach den Fig. 12 und 13 könnte auf den Okularverschluß verzichtet werden, wenn ein Metallamellenschlitzverschluß verwendet würde, der so ausgebildet ist, daß die Verschlußlamellen zusammen mit ihrer Frontplatte auf die Front der Filmbühneneinheit fest montiert sind und erst in Aufnahmestellung in den Verschlußantrieb einrasten; allerdings müßte dann auch der an der Rückseite der Filmbühneneinheit zurücklaufende Film kastenförmig umgeben gegen Okularlicht abgedichtet werden.

Nun seien die Fig. 26 und 27 im einzelnen erläutert:

Die Fig. 26 zeigt die Filmbühneneinheit 1 in ihrer inoperativen oder Bereitschaftsstellung, Fig. 27 in Aufnahmestellung bzw. bei Filmbeförderung. Der Film 6 läuft von der Filmvorratsspule 14 durch die Filmbühneneinheit 1 und auf der Rückseite von Führungsrollen 46 geleitet zurück zur Filmaufwickelspule 15. 47 ist die Seitenwandabdeckung des Suchergehäuses, 48 die Seitenwand und 8 die Mattscheibe. Der Pfeil in Fig. 26 zeigt die Bewegungsrichtung von Mattscheibe 8 und Filmbühneneinheit 1 an.

Die Ausbildungsform nach den Fig. 28 bis 30 zeichnet sich insbesondere dadurch aus, daß die Filmbühneneinheit um eine durch eine Seitenkante (oder eine parallele Linie in deren Nähe) gebildete Achse 53 in Aufnahme- bzw. Ruhestellung schwingt. Die gleichzeitig erfolgende Bewegung der Mattscheibe ist in ihrer Richtung nur insoweit definiert, als der Sucher freigegeben werden muß und weder der Ablauf der Bewegung der Filmbühneneinheit noch die Verstellbarkeit der Kamera (bezüglich Verschwenkung) und Verschiebung) beeinträchtigt werden darf. Der Film verläuft horizontal in die »Achsenkante« (die Kante, die die Drehachse der Schwungbewegung bildet oder in deren Nähe sich die Achse befindet) der Filmbühneneinheit eintretend und aus der frei schwingenden Kante austretend. Hinter der Filmbühneneinheit in Ruhestellung befinden sich beide Filmspulen und somit auf einer Seite des Suchergehäuses. Eine stärkere Filmbauschung, um die Bewegung der Filmbühneneinheit zu ermöglichen, ist nur bei dem aus der frei schwingend bewegten Kante der Filmbühneneinheit austretenden Filmabschnitt vor der Aufrollspule nötig. Während des Bewegungsablaufs für die Aufnahme sowie in Ruhestellung muß der Film durch entsprechende Abdunklung gegen Licht aus Sucher und Objektiv geschützt sein. Bei dieser Ausführungsform sind die Einzelheiten und Bauweisen der Fig. 19 bis 24 entsprechend anwendbar.

Bei dieser Ausführungsform erfolgt also die Bewegung der Filmbühneneinheit nicht quer sondern längs zur Filmrichtung, der Film muß also auf der Rükseite der Filmbühneneinheit über eine mit der Filmbühneneinheit verbundene Rolle zurückgeführt werden (Fig. 28 und 29). Die Kante der Filmbühneneinheit, in die der Film, von der ersten Filmspule (eventuell Filmpatrone) abgespult, eingeführt wird, bildet die Achse, um die sich die Filmbühneneinheit bewegt. Die Front der Filmbühneneinheit bildet eine Seitenwand des Suchergehäuses und dichtet dieses vollkommen gegen die Filmkammer ab. Wie bei der Ausgestaltung nach den Fig. 14 bis 25 ist die Filmbühnenöffnung in Ruhestellung durch Lamellen oder einen flexiblen Vorhang mit entsprechender Kabelzugaufhängung abgedeckt, die bewirkt, daß die Filmbühnenöffnung bei Bewegung in Aufnahmestellung freigegeben wird und sich beim Zurückschwenken in Ruhestellung schließt (Fig. 19 bis 23).

Der Film in Ruhestellung von der zweiten Spule (Filmaufwickelspule) locker gebauscht sein, um die Schwungbewegung der Filmbühneneinheit mitzumachen. Diese Bauschung ist am leichtesten herzustellen, wenn der Film befördert wird, während sich die Filmbühneneinheit in Aufnahmestellung befindet, da dann die Bauschung von selbst bei der Bewegung in Ruhestellung entsteht. Bei Beförderung des Films, während die Filmbühneneinheit sich in Ruhestellung befindet, muß die Bauschung durch eine gekurvte Führung des Films über eine Rolle erzeugt werden. Diese Rolle muß nach erfolgter Filmbeförderung aus der Bauschung heraustreten (Fig. 28 und 29).

Der Ablauf nach Betätigung des Auslösers geschieht wie folgt: Der auch hier notwendige Sucherokularverschluß schließt sich synchron mit dem Kameraverschluß. Die Filmbühneneinheit, eventuell durch Hebel oder Gestänge mit der Mattscheibe verbunden, schwingt in Aufnahmestellung, während die Mattscheibe den Suchergang verläßt. Durch Öffnen und Schließen des Kameraverschlusses erfolgt die Belichtung. Jetzt kann entweder der Bewegungsablauf abgebrochen werden, damit die Beförderung des Films in Aufnahmestellung der Filmbühneneinheit erfolgt, oder aber die Filmbühneneinheit schwingt in Ruhestellung zurück, und die Mattscheibe nimmt ihre Stellung im Suchergang wieder ein. Dann öffnen sich Kamera- und Okularverschluß. Wenn der Bewegungsablauf direkt nach der Belichtung abgebrochen wird, muß die Rückführung der Filmbühneneinheit sowie das Öffnen von Sucherokular- und Kameraverschluß durch die Spannhebelbetätigung erfolgen.

Gegenüber der Ausführungsform nach den Fig. 14 bis 25 verlangt die Ausführungsform nach den Fig. 28 bis 30, was die Abdunklung der Filmkammer angeht, geringeren technischen Aufwand. Eine Seitenwand, entsprechend dem Boden des Suchergehäuses bei der Ausgestaltung nach den Fig. 14 bis 25, wird von dem etwas verbreiterten Filmbühnenrahmen in Ruhestellung abgedeckt. Oberseite und Boden müssen nicht geöffnet werden, da die Bewegung der Filmbühneneinheit längs zum Filmverlauf und nicht quer dazu geschieht. Die Abdunklung der Filmbühnenöffnung kann in gleicher Weise wie nach den Fig. 19 bis 23 durch sich während der Bewegung der Filmbühneneinheit zusammenschiebende bzw. auseinanderziehende Lamellen oder einen ablaufenden Vorhang erfolgen.

Die Fig. 28, 29 und 30 seien nun im einzelnen erläutert:

Die Fig. 28 zeigt den Filmverlauf während der Filmbeförderung. Der Film 6 läuft von der Filmvorratsspule 14 um eine Rolle 50 durch die Filmbühneneinheit 1, von Rollen 51 und 49 auf der Rückseite der Filmbühneneinheit zurückgeführt um die Umlenk- bzw. Spannrolle 20 zur Filmaufwickelspule 15. Der gerade Pfeil zeigt die Bewegungsrichtung der Umlenk- bzw. Spannrolle 20 nach beendigter Filmbeförderung, der gebogene Pfeil die Bewegungsrichtung der Filmbühneneinheit 1.

Die Fig. 29 zeigt die Situation bei Aufnahmestellung. Eine Filmführung 52 ist nötig, damit der Film 6 beim Zurückschwingen in Ruhestellung nicht hinter der Filmvorratsspule 14 eingequetscht wird, sondern zu seiner ursprünglichen Bauschung zurückkehrt. Der Versuch, eventuell anstelle des genannten Verschlusses der Filmbühnenöffnung in Form von Lamellen oder Rollos einen direkt mit der Filmbühneneinheit verbundenen Schlitzverschluß (er müßte möglichst neben seinem Antriebsteil scharnierartig zu knicken sein) zu verwenden, würde einen erheblich gesteigerten Aufwand an Lichtabdichtung verlangen (zum Beispiel könnte die der Drehachse gegenüberliegende Kante ein Rollo in einer entsprechenden Führung hinter sich herziehen; die Ober- und Unterkante der Filmbühne müßten präzisest lichtdicht gegen Boden und Oberseite des Suchergehäuses abschließen, auch während der Bewegung der Filmbühneneinheit), so daß sich zumindest die Frage stellt, inwieweit der Aufwand (dazu ist auch die wesentlich größere bewegte Masse zu zählen, die wiederum eine erhöhte Dämpfung der Erschütterung erfordert) den Erfolg (Verzicht auf Sucherokularverschluß, nur ein einziger Verschlußablauf für die Belichtung) lohnt. Die Filmführung kann selbstverständlich unter Verzicht auf die Umlenk- bzw. Spannrollen 20 bei perforiertem Film durch Zahnkränze erfolgen. Die Rolle 49 wäre durch einen entsprechenden doppelten (für oberen und unteren Rand) Zahnkranz zu ersetzen, ein weiterer müßte vor der Filmaufwickelspule 15 angebracht sein. Im übrigen gilt auch hier das bereits unter Fig. 8 über perforierten Film gesagte.

Die Fig. 30 zeigt eine verbesserte Anordnung der Spulen und der Anordnung nach den Fig. 28 und 29. Die Filmvorratsspule 14 wird etwas nach unten gerückt. Die Rolle 49 kann dadurch in Richtung auf die Rolle 50 versetzt werden und ist nicht mehr mit der Filmbühneneinheit 1 verbunden, um die bewegte Masse der Filmbühneneinheit 1 zu verringern; stattdessen wird die Rolle 49 zur Umlenk- bzw. Spannrolle 20, die nach Filmbeförderung zur Erzeugung der Filmbauschung in Pfeilrichtung bewegt wird. Die Filmaufwickelspule 15 ist nach links versetzt. Da sich bei Bewegung der Filmbühneneinheit 1 der Film 6 zwischen der Filmspule 14 und dem Eintritt in die Filmbühneneinheit 1 spannt, sollte auch vorzugsweise die Rolle 50 nach der Filmbeförderung etwas nach links bewegt werden. Um das Einlegen des Films 6 zu erleichtern, könnte bei perforiertem Film, der in die Filmvorratsspule 14 zurückgespult werden muß, ein perforiertes Band an der Filmaufwickelspule 15 angebracht werden, an dessen freies Ende der Filmanfang angehängt würde, und zwar vor Eintritt in die Filmbühneneinheit 1. Zur Verminderung der Reibung sollte beim Filmtransport die Filmandruckplatte 4 vorzugsweise etwas abgehoben werden. Um das Einfädeln von Rollfilmen zu erleichtern, kann die Filmbühneneinheit 1 zusammen mit der entsprechenden Abdunklungsvorhangmechanik von der Filmandruckplatte 4 wegklappbar ausgebildet sein, damit man den Film über die freiliegende Filmandruckplatte 4 ziehen kann. Auch Decke und Rückwand der Filmkammer (möglichst einer auswechselbaren Filmkassette) sollten zum Filmeinlegen zu öffnen sein. Die Filmvorratsspule 14 sollte gegebenenfalls in eine Art lichtdichte Patrone eingelegt werden, um den Vorspann bis zum Filmbeginn bei Tageslicht abrollen zu können. Natürlicherweise kann die Richtung des Filmverlaufs, wenn sich dies aus bestimmten Gründen als praktikabler erweisen sollte, umgekehrt verlaufen. Der technische Aufwand, den eine sofortige Rückkehr des Sucherbilds nach der Aufnahme erfordern würde, ist wohl etwas teuer erkauft, zumal da ein absolut identischer Bildstand bei Mehrfachbelichtungen (nötig etwa bei der Ausleuchtung größerer Räume durch Blitzserien) nach Rückkehr der Filmbühneneinheit nur schwer herzustellen wäre.

Das Problem der Filmbauschung reduziert sich natürlicherweise bei Filmtransport mit Filmbühneneinheit in Aufnahmestellung auf ein Minimum.

Die Filmbühneneinheit 1 und mit ihr die Rolle 51 sollten aus leichtesten Materialien sein, um die bewegte Masse auf ein Minimum zu reduzieren, die Rolle 51 aus möglichst leichtem Kunststoff, die Filmbühneneinheit 1 aus einer Leichtmetallegierung. Die Bewegung der Mattscheibe 8 kann auf etwa die Hälfte reduziert werden, wenn man die Mattscheibe 8 halbiert und die beiden Hälften bei der Aufnahme nach oben und unten auseinanderschiebt. Der Sprung im Mattscheibenbild müßte nach allzusehr stören, da ein quadratisches Linienmuster sowieso angebracht werden sollte. Außerdem können die beiden Mattscheibenhälften, da sie nicht wie die Filmbühneneinheit 1 an einem starr fixierten Punkt gestoppt werden müssen, federnd abgefangen werden.

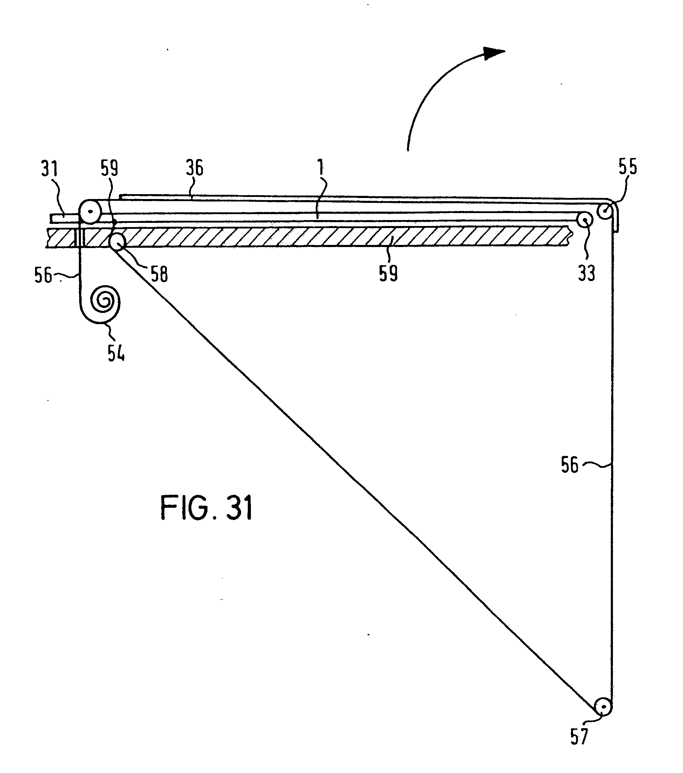

Was den Vorhang vor der Filmbühnenöffnung angeht, so ist es wohl praktischer, diesen, wie in Fig. 31 dargestellt, durch entsprechend umgeleitete Seilzüge über die Drehachse der Filmbühneneinheit zu ziehen, als über die frei schwingende Kante der Filmbühneneinheit, wie in Fig. 22. Die Kupplung an die Schwingbewegung der Filmbühneneinheit 1 könnte auch so beibehalten werden.

Die Fig. 31 zeigt eine Abwandlung der Abdeckung der Filmbühneneinheit 1 nach Fig. 22 und zwar wird, abweichend von Fig. 22, der Vorhang 36 über eine im Bereich der Drehachse 33 angeordnete Rolle 55 von dem in der Filmbühnenöffnung weggezogen, wenn die Filmbühneneinheit 1 in Pfeilrichtung in ihre operative Stellung verschwenkt wird. Dazu ist in der Nähe der freischwingenden Kante 31 das eine Ende des Vorhangkabels 56 auf der einen Seite des Vorhanges 36 in eine federnde Aufrolleinrichtung 54 geführt. Außerdem ist das Vorhangkabel 56 auf der anderen Seite des Vorhangs 36 über Kabelumlenkrollen 57 und 58 mit der Filmbühneneinheit 1 im Bereich vor deren freischwingender Kante 31 an der Stelle 59 fest verbunden. Der Vorteil dieser Bauweise gegenüber der von Fig. 22 besteht darin, daß die Lage der Kabelumlenkrolle 58 und der Stelle 59 an einer beliebigen Zwischenstelle zwischen der freischwingenden Kante 31 und der Schwenkachse 33 gewählt werden kann, und zwar so, daß die dadurch beim Verschwenken der Filmbühneneinheit vor der inoperativen in die operative Stellung durch die Stelle 59 zurückgelegte Strecke etwa gleich der Vorhanglänge bzw. der Filmbühnenbreite wird. Auf diese Weise kann die Vorhangbewegung so gering wie möglich gehalten werden. Mit 59 ist der Gehäuserahmen bezeichnet, der in den Fig. 19 und 22 aus Darstellungsgründen weggelassen ist.

Die mit der Erfindung erzielten Vorteile bestehen zum einen in der eminenten Vereinfachung der Handhabung, die bisher bei verstellbaren Kameras notwendig war (siehe den eingangs angegebenen Stand der Technik). Zum anderen ergeben sich gegenüber der Spiegelreflexkamera, die bisher den höchsten Stand der Kameratechnik beim Kleinbild- und Mittelformat darstellt, insbesondere folgende weitere Vorteile:

(a) Bei der Objektivkonstruktion muß nicht mehr auf den Schwingspiegel Rücksicht genommen werden, was bei Weitwinkelobjektiven Verzicht auf die aufwendigen Retrofokuskonstruktionen bedeutet.

(b) Mit entsprechenden Balgengeräten kann mit fast allen Objektiven von Unendlich bis in den extremen Makrobereich kontinuierlich ohne umständliche Verwendung von Zwischenringen eingestellt werden, da sich das Balgengerät nicht zwischen Spiegelgehäuse und Objektiv sondern zwischen Mattscheibe bzw. Filmebene und Objektiv befindet.

(c) Die Möglichkeit der Kameraverstellung ist (soweit Objektive mit entsprechend erweitertem Bildkreis konstruiert werden) gegenüber den Shiftobjektiven für Spiegelreflexkameras stark erhöht.

(d) Soweit keine optischen Elemente des Objektivs beim Fokussieren gegeneinander verschoben werden, kann bei Objektiven auf eine eigene Einstellschnecke zum Fokussieren verzichtet werden, da dies über den verstellbaren Balgen erfolgen kann (Gewichts- und Kostenersparnis beim Objektiv).

**Patentansprüche**

1. Fotographische Kamera, insbesondere für architektonische und technische Aufnahmen, bei der die Objektivstandarte und der Kamerarückteil des Kameragehäuses verschwenkbar ausgebildet sind und das Objektiv parallel zur Bildebene verschiebbar ist, in die wahlweise eine Mattscheibe (8) oder ein in der Filmhalterung (1) gehaltener und von einer Filmvorratsspule (14) zugeführter sowie von einer Filmaufwickelspule (15) aufnehmbarer Filmabschnitt von bandförmigem Filmmaterial (6) bewegbar ist, umfassend

(a) eine Mattscheibenbetätigungseinrichtung (12, 38) zum Bewegen der Mattscheibe (8) zwischen einer operativen Stellung, in der sie sich in der Bildebene befindet, und einer inoperativen Stellung, in der sie sich außerhalb der Bildebene befindet;

(b) eine Filmhalterungsbetätigungseinrichtung (9, 39) zum Bewegen der Filmhalterung (1) zwischen einer inoperativen Stellung, in welcher sich der darin gehaltene Filmabschnitt außerhalb der Bildebene befindet, und einer operativen Stellung, in welcher sich der darin gehaltene Filmabschnitt in der Bildebene befindet;

(c) eine Kopplungseinrichtung (13, 40, 41) zum Koppeln der Bewegung der Mattscheibe (8) und der Bewegung der Filmhalterung (1) derart, daß die Bewegung der Mattscheibe (8) in ihre inoperative Stellung zeitlich vor oder gleichzeitig mit der Bewegung der Filmhalterung (1) in deren operative Stellung erfolgt und daß die Bewegung der Filmhalterung (1) in ihre inoperative Stellung zeitlich vor oder gleichzeitig mit der Bewegung der Mattscheibe (8) in deren operative Stellung erfolgt,

dadurch gekennzeichnet, daß eine Schlaufenbildungseinrichtung (20, 22—24) zum Ausbilden einer Schlaufe des bandförmigen Filmmaterials (6) zwischen einer ortsfesten Filmvorratsspule (14) und der Filmhalterung (1) und/oder zwischen der Filmhalterung (1) und einer ortsfesten Filmaufwickelspule (15) zum Ermöglichen der Bewegung der Filmhalterung (1) relativ zur Filmzuführungs- und -abführungseinrichtung (14, 15, 20, 22—24, 49—51) in die operative Stellung und/oder in die inoperative Stellung vorgesehen ist.

2. Fotographische Kamera nach Anspruch 1, dadurch gekennzeichnet, daß die Schlaufenbildungseinrichtung (20) zur Ausbildung der jeweiligen Schlaufe eine zwischen der Filmvorratsspule (14) und der Filmhalterung (1) und/oder eine zwischen der Filmhalterung (1) und der Filmaufwickelspule (15) angeordnete Filmumlenkspule (20) aufweist, die aus der durch die Umlenkung des Films (6) gebildeten Schlaufe herausbewegbar ist, während oder bevor die Bewegung der Filmhalterung (1) aus deren inoperativen in deren operative Stellung erfolgt; oder daß die Schlaufenbildungseinrichtung (22—24) mehrere synchron drehbare Zahnkränze (22—24) aufweist, die in Perforationen des Films (6) eingreifen, und zwar vorzugsweise einen ersten zwischen der Filmvorratsspule (14) und der Filmhalterung (1), bevorzugt in der Nähe der Filmvorratsspule (14) angeordneten Zahnkranz (22) zur Ausbildung einer Filmschlaufe zwischen diesem Zahnkranz (22) und der Filmhalterung (1), sowie einen zweiten und dritten Zahnkranz (23, 24) zwischen der Filmhalterung (1) und der Filmaufwickelspule (15) zur Ausbildung einer Filmschlaufe zwischen diesen beiden Zahnkränzen (23, 24), von denen der eine bevorzugt in der Nähe der Filmaustrittsstelle der Filmhalterung (1) und der andere bevorzugt in der Nähe der Filmaufwickelspule (15) angeordnet ist.

3. Fotographische Kamera nach Anspruch 1 oder 2, dadurch gekennzeichnet, daß die Filmhalterung (1) um eine zur Längsrichtung des Films (6) senkrechte Schwenkachse, die an oder in der Nähe der Eintrittsstelle des Films (6) in die Filmhalterung (1) angeordnet ist, von der inoperativen in die operative Stellung, und umgekehrt, verschwenkbar ist; wobei vorzugsweise die Filmzuführungs- und -abführungseinrichtung (14, 15, 20, 22—24, 49—51), insbesondere die Filmvorratsspule (14) und die Filmaufwickelspule (15), relativ zu der in der operativen Stellung befindlichen Mattscheibe (8) hinter der Filmhalterung (1) angeordnet sind; und wobei außerdem bevorzugt eine erste Filmumlenkspule (50) zwischen der Filmvorratsspule (14) und der Filmhalterung (1) ortsfest in der Nähe der Eintrittsstelle des Films (6) in die Filmhalterung (1) vorgesehen und eine zweite Filmumlenkspule (51) an der Austrittsstelle des Films (6) aus der Filmhalterung (1) an letzterer befestigt ist, wobei ferner gegebenenfalls eine dritte Filmumlenkspule (49) zwischen der zweiten Filmumlenkspule (51) und einer zur Schlaufenbildung vorgesehenen, beweglichen Filmumlenkspule (20) an der Rückseite der Filmhalterung (1) angebracht ist.

4. Fotographische Kamera nach Anspruch 1 oder 2, dadurch gekennzeichnet, daß die Filmhalterung (1) um eine zur Längsrichtung des Films (6) parallele Schwenkachse (26), die an oder in der Nähe eines ihrer in dieser Längsrichtung verlaufenden Ränder angeordnet ist, von der inoperativen in die operative Stellung, und umgekehrt, verschwenkbar ist; wobei vorzugsweise die Filmzuführungseinrichtung (14, 20, 22) auf der einen Seite und die Filmabführungseinrichtung (15, 20, 23, 24) auf der anderen Seite der senkrecht zur Filmlängsrichtung verlaufenden Ränder der Filmhalterung (1) vorgesehen und bevorzugt die Achsen der Filmvorratsspule (14) und der Filmaufwickelspule (15) senkrecht zur Ebene des in der Filmhalterung (1) befindlichen Filmabschnitts ausgerichtet sind, wenn sich die Filmhalterung (1) in der inoperativen Stellung befindet.

5. Fotographische Kamera nach einem der Ansprüche 1 bis 4, dadurch gekennzeichnet, daß die Filmhalterung (1) und die Mattscheibe (8) neben- oder übereinander angeordnet sind, und daß vorzugsweise

(a) die Filmhalterung (1) und die Mattscheibe (8) starr miteinander verbunden und unverwinkelt zueinander vorgesehen sind, so daß der in der Filmhalterung (1) befindliche Film und die Mattscheibe (8) in der gleichen Ebene liegen und aus der inoperativen in die operative Stellung, und umgekehrt, in dieser Ebene verschiebbar sind, und vorzugsweise die Achsen der Filmvorratsspule (14) und der Filmaufwickelspule (15) parallel zur Ebene der Mattscheibe (8) angeordnet sind; wobei bei einer Übereinanderanordnung, bei der die Filmhalterung (1) und die Mattscheibe (8) senkrecht zur Längsrichtung des Films (6) bewegbar sind, bevorzugt die Filmzuführungseinrichtung (14, 20, 22) auf der einen Seite und die Filmabführungseinrichtung (15, 20, 23, 24) auf der anderen Seite der senkrecht zur Filmlängsrichtung verlaufenden Ränder der Filmhalterung (1) und der Mattscheibe (8) vorgesehen sind, während bei einer Nebeneinanderanordnung, bei der die Filmhalterung (1) und die Mattscheibe (8) in der Längsrichtung des Films (6) bewegbar sind, bevorzugt die Filmzuführungs- und -abführungseinrichtung (14, 15, 20, 22—24) gemeinsam auf der Seite des senkrecht zur Filmlängsrichtung verlaufenden und der Mattscheibe (8) abgewandten Randes der Filmhalterung (1) angeordnet sind; oder

(b) die Filmhalterung (1) und die Mattscheibe (8) gelenkig miteinander verbunden sind sowie in der operativen Stellung der Mattscheibe (8) und der inoperativen Stellung der Filmhalterung (1) einen stumpfen bis spitzen Winkel miteinander einschließen und die Filmhalterung (1) bevorzugt derart geführt ist, daß sich der Winkel, den sie mit der Mattscheibe (8) einschließt, entweder kontinuierlich auf Null Grad verkleinert, sofern die Mattscheibe (8) und die Filmhalterung (1) übereinander angeordnet und an ihren einander abgewandten Rändern miteinander gelenkig verbunden sind, oder kontinuierlich auf 180 Grad vergrößert, wenn die Mattscheibe (8) und die Filmhalterung (1) nebeneinander angeordnet und an ihren einander zugewandten Rändern gelenkig miteinander verbunden sind; wobei vorzugsweise die Filmzuführungseinrichtung (14, 20, 22) auf der einen Seite und die Filmabführungseinrichtung (15, 20, 23, 24) auf der anderen Seite der senkrecht zur Filmlängsrichtung verlaufenden Ränder der Filmhalterung (1) und der Mattscheibe (8) vorgesehen sind.

6. Fotographische Kamera nach einem der Ansprüche 1 bis 5, dadurch gekennzeichnet, daß eine Abdunklungseinrichtung (16, 27, 36, 42) zum Abdunkeln des in der Filmhalterung (1) befindlichen Filmabschnitts vor und nach dessen Belichtung sowie zum Abdunkeln des in der Filmzuführungs- und -abführungseinrichtung (14, 15, 20, 22—24) befindlichen Films (6) vor, während und nach der Belichtung vorgesehen ist, und zwar vorzugsweise:

(a) ein synchron mit dem Belichtungsverschluß schließbarer Sucherokularverschluß, welcher an die Mattscheiben- und/oder Filmhalterungsbetätigungseinrichtung (9, 12, 38, 39) derart angekoppelt ist, daß eine Abdunklung des Suchergehäuses (25) während der Bewegung der Filmhalterung (1) in die operative und in die inoperative Stellung erfolgt und

(b) eine ortsfeste oder synchron zur Bewegung der Filmhalterung (1) betätigbare Abdunklungseinrichtung (16, 42) für die Filmzuführungs- und -abführungseinrichtung (14, 15, 20, 22—24); sowie eine ebenfalls synchron zur Bewegung der Filmhalterung (1) betätigbare Abdunklungseinrichtung für den in der Filmhalterung (1) befindlichen Filmabschnitt, sofern sich die Filmhalterung (1) in ihrer inoperativen Stellung im Streulichtbereich des Suchergehäuses (25) befindet.

7. Fotographische Kamera nach einem der Ansprüche 1 bis 6, dadurch gekennzeichnet, daß die Filmhalterung (1) als Filmbühneneinheit ausgebildet ist, die einen Filmbühnenrahmen (2), eine Filmandruckplatte (4) und eine oder mehrere, die Filmandruckplatte (4) gegen den Filmabschnitt und diesen gegen den Filmbühnenrahmen (2) drückende Federn (5) aufweist.

**Claims**

1. A photographic camera, in particular for architectonic and technical photographs, in which the lens panel and the rear part of the camera housing are designed so that they may pivot, and the lens may be moved parallel to the focal plane, in which a focussing screen (8) or a film section of strip-shaped film material (6) may selectively be moved, and said film section is held in a film holding device (1), is delivered by a film feed spool (14) and may be received by a film take-up spool (15), the camera comprising

(a) a focussing screen actuating device (12, 38) for moving the focussing screen (8) between an operative position in which it is located in the image plane, and an inoperative position in which it is located outside the image plane;

(b) a film holder actuating device (9, 39) for moving the film holding device (1) between an inoperative position in which the film section which is held therein is located outside the focal plane, and an operative position in which the film section which is held therein is located outside the focal plane, and an operative position in which the film section which is held therein is located in the focal plane;

(c) a coupling device (13, 40, 41) for coupling the movement of the focussing screen (8) and the movement of the film holding device (1) such that the focussing screen (8) moves into its inoperative position before or at the same time as the film holding device (1) moves into its operative position, and such that the film holding device (1) moves into its inoperative position before or at the same time as the focussing screen (8) moves into its operative position,

characterised in that a loop forming device (20, 22—24) for the formation of a loop of the strip-shaped film material (6) is provided between a stationary film feed spool (14) and the film holding device (1) and/or between the film holding device (1) and a stationary film take-up spool (15) to allow the movement of the film holding device (1) relative to the film delivery and- removal devices (14, 15, 20, 22—24, 49—51) into the operative position and/or into the inoperative position.

2. A photographic camera according to claim 1, characterised in that the loop forming device (20) for the formation of the respective loop has a film deflection spool (20) which is positioned between the film feed spool (14) and the film holding device (1) and/or has a film deflection spool (20) which is positioned between the film holding device (1) and the film take-up spool (15) and which may be moved out of the loop which is formed by the deflection of the film (6), while or before the film holding device (1) moves out of its inoperative position into its operative position, or the loop forming device (22—24) has several synchronously rotatable toothed rings (22—24) which engage in perforations in the film (6), and namely preferably a first toothed ring (22) which is positioned between the film feed spool (14) and the film holding device (1), preferably in the vicinity of the film feed spool (14), to form a loop of film between this toothed ring (22) and the film holding device (1), and a second and third toothed ring (23, 24) between the film holding device (1) and the film takeup spool (15) to form a loop of film between these two toothed rings (23, 24), one of which is preferably positioned in the vicinity of the outlet point of the film from the film holding device (1) and the other is preferably positioned in the vicinity of the film take-up spool (15).

3. A photographic camera according to claim 1 or 2, characterised in that the film holding device (1) may be pivoted out of the inoperative position into the operative position, and vice versa, about a swivel axis which is perpendicular to the longitudinal ·direction of the film (6) and is positioned at or in the vicinity of the inlet point of the film (6) into the film holding device (1), the film delivery and removal devices (14, 15, 20, 22—24, 49—51), in particular the film feed spool (14) and the film take-up spool (15), preferably being positioned relative to the focussing screen (8), located in the operative position, downstream of the film holding device (1), and, moreover, a first film deflection spool (50) is preferably provided between the film feed spool (14) and the film holding device (1) in a stationary manner in the vicinity of the inlet point of the film (6) into the film holding device (1), and a second film deflection spool (51) is attached to the film holding device (1) at the outlet point of the film (6) from the holding device (1), and furthermore, a third film deflection spool (49) is optionally positioned on the rear of the film holding device (1) between the second film deflection spool (51) and a movable film deflection spool (20) which is provided to form a loop.

4. A photographic camera according to claim 1 or 2, characterised in that film holding device (1) may be pivoted from the inoperative position into the operative position, and vice versa, about a swivel axis (26) which is parallel to the longitudinal direction of the film (6) and is positioned on or in the vicinity of one of its edges which run in this longitudinal direction, the film delivery device (14, 20, 22) preferably being provided on one side and the film removal device (15, 20, 23, 24) preferably being provided on the other side of the edges of the film holding device (1) which run perpendicularly to the longitudinal direction of the film, and the axes of the film feed spool (14) and of the film take-up spool (15) are preferably aligned perpendicularly to the plane of the film section which is located in the film holding device (1) when the film holding device (1) is in its inoperative position.

5. A photographic camera according to one of claims 1 to 4, characterised in that the film holding device (1) and the focussing screen (8) are positioned next to one another or one on top of the other, and preferably

(a) the film holding device (1) and the focussing screen (8) are regidly interconnected and are provided so that they are not at angle with respect to one another such that the film which is in the film holding device (1) and the focussing screen (8) lie in the same plane and may be moved out of the inoperative position into the operative position, and vice versa, in this plane, and the axes of the film feed spool (14) and of the film take-up spool (15) are preferably positioned parallel to the plane of the focussing screen (8), and in a superpositioned arrangement in which the film holding device (1) and the focussing screen (8) may be moved perpendicularly to the longitudinal direction of the film (6), the film delivery device (14, 20, 22) is preferably provided on one side and the film removal device (15, 20, 23, 24) is preferably provided on the other side of the edges of the film holding device (1) and of the focussing screen (8) which run perpendicularly to the longitudinal direction of the film, whereas in an adjacent arrangement in which the film holding device (1) and the focussing screen (8) may be moved in the longitudinal direction of the film (6), the film delivery and removal devices (14, 15, 20, 22—24) are preferably positioned together on the side of the edge of the film holding device (1) which runs perpendicularly to the longitudinal direction of the film and is remote from the focussing screen (8); or

(b) the film holding device (1) and the focussing screen (8) are hinged together and together include an obtuse to acute angle in the operative position of the focussing screen (8) and in the inoperative position of the film holding device (1), and the film holding device (1) is preferably guided such that the angle which the holding device (1) includes with the focussing screen (8) either continuously decreases to zero degrees, if the focussing screen (8) and the film holding device (1) are superimposed and are hinged together at their edges which are remote from one another, or continuously increases to 180° if the focussing screen (8) and the film holding device (1) are positioned adjacently and are hinged together at their edges which face one another, the film delivery device (14, 20, 22) preferably being provided on one side and the film removal device (15, 20, 23, 24) preferably being provided on the other side of the edges of the film holding device (1) and of the focussing screen (8) which run perpendicularly to the longitundinal direction of the film.

6. A photographic camera according to one of claims 1 to 5, characterised in that a blacking-out device (16, 27, 36, 42) is provided for blacking for blacking out the film section which is in the film holding device (1) before and after exposure thereof, and for blacking out the film (6) which is in the film delivery and removal devices (14, 15, 20, 22—24) before, during and after exposure, and namely preferably:

(a) a viewfinder eyepiece shutter which may may be closed synchronously with the exposure shutter and is coupled with the focussing screen and/or the film holder actuating device (9, 12, 38, 39) such that the viewfinder housing (25) is blacked out during the movement of the holding device (1) into the operative and inoperative positions, and

(b) a blacking out device (16, 42) which is stationary or may be actuated synchronously with the movement of the film holding device (1) for the film delivery and removal devices (14, 15, 20, 22—24), and a blacking out device which may also be actuated synchronously with the movement of the film holding device (1) for the film section located in the holding device (1), if the holding device (1) is in its inoperative position in the dispersed light region of the viewfinder housing (25).

7. A photographic camera according to one of claims 1 to 6, characterised in that the film holding device (1) is designed as a film stage unit which has a film stage frame (2), a film contact pressure plate (4) and one or more springs (5) which press the film contact pressure plate (4) against the film section and press the film section against the film stage frame (2).

## Revendications

1. Caméra photographique, en particulier pour des prises de vue architectoniques et techniques, dans laquelle les standards d'objectifs et la partie arrière de caméra du boîtier de la caméra sont réalisés de façon pivotable et l'objectif peut coulisser parallèlement au plan de l'image, dans laquelle peut se déplacer, au choix, un écran dépoli (8) ou une section de film d'un ruban de film, maintenue dans la monture de film (1) amenée à partir d'une bobine de magasin de film (14) et pouvant être réceptionnée sur une bobine de rembobinage (15) comprenant:

(a) un équipement de manoeuvre de l'écran dépoli (12, 38) pour déplacer l'écran dépoli (8) entre une position opérationelle, dans laquelle il se trouve dans le plan de l'image, et une position non-opérationelle dans laquelle il se trouve en dehors du plan de l'image;

(b) un équipement de manoeuvre de la monture du film (9, 39) pour déplacer la monture de film (1) entre une position non-opérationelle dans laquelle la section de film qui y est contenue se trouve en dehors du plan de l'image, et une position opérationnelle dans laquelle la section de film qui y est contenue se trouve dans le plan de l'image;

(c) un dispositif de couplage (13, 40, 41) pour coupler le mouvement de l'écran dépoli (8) et le mouvement de la monture de film (1), de telle sorte que le mouvement de l'écran dépoli (8) dans la position nonopérationnelle s'effectue avant ou simultanément avec le mouvement de la monture de film (1) dans sa position opérationnelle et que le mouvement de la monture de film (1) dans sa position non-opérationnelle s'effectue avant ou simultanément avant le mouvement de l'écran dépoli (8) dans sa position opérationnelle,

caractérisée en ce qu'un équipement de formation de boucle (20, 22—24) est prévu pour former une boucle du film en ruban (6) entre une bobine de magasin de film (14) fixe et la monture de film (1) et/ou entre la monture de film (1) et une bobine de rembobinage de film (15) fixe pour rendre possible le mouvement de la monture de film (1) par rapport à l'équipement d'alimentation et d'évacuation du film (14, 15, 20, 22—24, 49—51) dans la position opérationelle et/ou dans la position non-opérationnelle.

2. Caméra photographique selon la revendication 1, caractérisée en ce que l'équipement de formation de boucle (20) pour la formation de chaque boucle présente une bobine de renvoi (20) disposée entre la bobine d'alimentation de film (14) et la monture de film (1) et/ou une bobine de renvoi (20) entre la monture de film (1) et la bobine de rembobinage (15), qui peut être extraite de la boucle formée par le renvoi du film (6), pendant ou avant le mouvement de la monture de film (1) de sa position non-opérationelle vers sa position opérationnelle; ou en ce que l'équipement de formation de boucle (22—24) présente plusieurs couronnes dentées (22—24) pouvant être actionnées de façon synchrone, qui viennent en prise dans des perforations du film (6) et de préférence une première couronne dentée (22) disposée entre la bobine de magasin de film (14) et la monture de film (1), préférentiellement au voisinage de la bobine de magasin de film (14), pour la formation d'une boucle de film entre cette couronne dentée (22) et la monture de film (1), ainsi qu'une deuxième et une troisième couronnes dentées (23, 24) entre la monture de film (1) et la bobine de rembobinage de film (15) pour la formation d'une boucle de film entre ces deux couronnes dentées (23, 24), l'une des deux étant disposée préférentiellement au voisinage de l'endroit de sortie du film de monture de film (1) et l'autre préférentiellement au voisinage de la bobine de rembobinage du film (15).

3. Caméra photographique selon la revendication 1 ou 2, caractérisée en ce que la monture de film (1) est montée à pivotement de la position non-opérationnelle à la position opérationelle et inversement, autour d'un axe de pivotement perpendiculaire à la direction longitudinale du film (6), qui est disposé à l'endroit d'entrée ou au voisinage de l'endroit d'entrée du film (6) dans la monture de film (1), l'équipement d'alimentation et d'évacuation du film (14, 15, 20, 22—24, 49—51), en particulier la bobine de magasin du film (14) et la bobine de rembobinage de film (15), sont disposés derrière la monture de film (1) par rapport à l'écran dépoli (8) se trouvant en position opérationelle, et où en outre, de préférence une première bobine de renvoi de film (50) est prévue de façon fixe au voisinage de l'endroit d'entrée du film (6) dans la monture de film (1) entre la bobine de magasin de film (14) et la monture de film (1) et une deuxième bobine de renvoi de film (51) est fixée sur la monture de film (1) à l'endroit de sortie du film (6) de la monture de film (1), une troisième bobine de renvoi de film (49) étant montée le cas échéant, sur le côté arrière de la monture de film (1) entre la deuxième bobine de renvoi de film (51) et une bobine de renvoi de film (20) mobile prévue pour la formation de boucle.

4. Caméra photographique selon la revendication 1 ou 2, caractérisée en ce que la monture de film (1) est montée à pivotement de la position non-opérationnelle à la position opérationelle et inversement, autor d'un axe de pivotement (26) parallèle à la direction longitudinale du film (6), qui est disposé sur ou voisinage d'un de ses bords s'étendant dans cette direction longitudinale, l'équipement d'alimentation du film (14, 20, 22) étant prévu de préférence d'un côté et l'équipement d'évacuation du film (15, 20, 23, 24) de l'autre côté des bords de la monture de film (1) s'étendant perpendicullairement à la direction longitudinale du film et où de préférence les axes de la bobine de magasin de film (14) et de la bobine d'embobinage du film (15) sont dirigés perpendiculairement au plan de la section de film se trouvant dans la monture de film quand la monture de film (1) se trouve dans la position non-opérationelle.

5. Caméra photographique selon l'une des revendications 1 à 4, caractérisée en ce que la monture de film (1) et l'écran dépoli (8) sont disposés côte à côte ou l'un pardessus l'autre et en ce que, de préférence,

(a) la monture de film (1) et l'écran dépoli (8) sont fixés ensemble de façon rigide et sans décalage angulaire entre eux, de sorte que le film se trouvant dans la monture de film (1) et l'écran dépoli (8) se trouvent dans la même plan et peuvent coulisser dans ce plan de la position non-opérationnelle à la position opérationelle et inversement, et, de préférence, les axes de la bobine de magasin de film (14) et de la bobine de rembobinage de film (15) sont disposés parallèlement au plan de l'écran dépoli (8), où en cas de superposition où la monture de film (1) et l'écran dépoli (8) sont mobiles perpendiculairement à la direction longitudinale du film (6), l'équipement d'alimentation du film (14, 20, 22) est prévu d'un côté et l'équipement d'évacuation du film (15, 20, 23, 24) de l'autre côté des bords s'étendant perpendiculairement à la direction longitudinale du film, de la monture de film (1) et de l'écran dépoli (8), alors qu'en cas de juxtaposition où la monture de film (1) et l'écran dépoli (8) sont mobiles dans la direction longitudinale du film (6), l'équipement d'alimentation du film et d'évacuation du film (14, 25, 20, 22—24) sont disposés de préférence ensemble du côté du bord de la monture de film (1), s'étendant perpendiculairement à la direction longitudinale du film et opposé à l'écran dépoli (8); ou

(b) la monture de film (1) et l'écran dépoli (8) sont reliés de façon articulée et forment ensemble un angle obtus jusqu'à un angle aigu dans la position opérationnelle de l'écran dépoli (8) et la position non-opérationnelle de la monture de film (1) et la monture de film (1) est guidée de préférence de telle sorte que l'angle qu'elle forme avec l'écran dépoli (8) soit réduit de façon continue vers zéro degré, dans la mesure où l'écran dépoli (8) et la monture de film (1) sont disposés de façon superposée et sont reliés ensemble de façon articulée par leurs bords opposés, ou s'accroît de façon continue jusqu'à 180 degrés quand l'écran dépoli (8) et la monture de film (1) sont juxtaposés et sont reliés ensemble de façon articulée à leurs bords tournés l'un vers l'autre, l'équipement d'alimentation du film (14, 20, 22) étant prévu d'un côté et l'équipement d'évacuation du film (15, 20, 23, 24) de l'autre côté des bords perpendiculaires à la direction longitudinale du film, de la monture de film (1) et de l'écran dépoli (8)

6. Caméra photographique selon l'une des revendications 1 à 6, caractérisée en ce qu'un équipement d'obscurcissement (16, 27, 36, 42) est prévu pour obscurcir de la section de film se trouvant dans la monture de film (1) avant et après son obscurcissement ainsi que pour obscurcir le film (6) se trouvant dans l'équipement d'alimentation du film et d'évacuation du film (14, 15, 20, 22—24) avant, pendant et après l'éclairement, et de préférence:

(a) un obturateur d'oculaire chercheur pouvant être fermé en synchronisme avec l'obturateur d'éclairement, qui est couplé à l'équipement de manoeuvre de l'écran dépoli et/ou de la monture de film (9, 12, 38, 39) de telle sorte qu'il se produit un obscurcissement du boîtier chercheur (25) pendant le mouvement de la monture de film (1) dans la position opérationnelle et dans la position non-opérationnelle, et

(b) un équipement d'alimentation de film et d'évacuation du film (14, 15, 20, 22—24);

(c) un équipement d'obscurcissement (16, 42) fixe ou pouvant être manipulé de façon synchrone pour le déplacement de la monture de film (1) pour l'équipement d'alimentation du film et d'évacuation du film (14, 15, 20, 22—24); ainsi qu'un équipement d'obscurcissement, pouvant également être manipulé en synchronisme avec le mouvement de la monture de film (1), pour la section de film se trouvant dans la monture de film (1), dans la mesure où la monture de film (1) se trouve dans la position non-opérationnelle dans la zone de lumière diffuse du boîtier chercheur (25).

7. Caméra photographique selon l'une des revendications 1 à 6, caractérisée en ce que la monture de film (1) est réalisée sous forme d'unité de plateau de film, qui présente une plaque de pression du film (2), un cadre de plateau de film (2), une plaque de pression de film (4) et un ou plusieurs ressorts (5) appuyant la plaque de pression de film (4) contre la section de film et celle-ci contre le cadre de plateau de film (2).

20

## FIG.1

5

3    2

4    6

5

1

## FIG.2

_7_

_2_

1

## FIG.3

10

12

9

8

13

1

11

## FIG.4

12

8

10

13

9

1

11

FIG. 5

FIG. 6

FIG. 7

FIG. 8

FIG.9

FIG.10

FIG.11

FIG.12

# FIG. 13

24

15

23

17

6

22

14

1

# FIG. 14

6

6 b

14

6a

1

26

# FIG. 15

15

14

6 b

6 b

6a

1

6a

6

FIG. 16

FIG. 17

FIG. 18

## FIG. 19

## FIG. 20

## FIG. 21

## FIG. 22

FIG. 23

FIG. 24

FIG. 25

FIG. 26

FIG. 27

FIG.28

FIG. 29

FIG.30

FIG. 31